# EUROPEAN PATENT SPECIFICATION

(11) **EP 2 128 208 B1**
(45) Date of publication and mention of the grant of the patent: **08.08.2012**
(21) Application number: 07832304.5
(22) Date of filing: 21.11.2007
(51) Int. Cl.: C09D 143/04, B05D 7/24, C09D 5/16, C09D 7/12

(54) **STAIN-PROOF COATING COMPOSITION, METHOD FOR PRODUCTION OF THE COMPOSITION, STAIN-PROOF COATING FILM FORMED BY USING THE COMPOSITION, COATED ARTICLE HAVING THE COATING FILM ON THE SURFACE, AND STAIN-PROOFING TREATMENT METHOD FOR FORMING THE COATING FILM**
ZUSAMMENSETZUNG ZUR HERSTELLUNG EINER FLECKENFESTEN BESCHICHTUNG, VERFAHREN ZUR HERSTELLUNG DER ZUSAMMENSETZUNG, UNTER EINSATZ DER ZUSAMMENSETZUNG GEBILDETER FLECKENFESTER BESCHICHTUNGSFILM, BESCHICHTETER GEGENSTAND MIT DEM BESCHICHTUNGSFILM AUF DER OBERFLÄCHE SOWIE FLECKENFESTBEHANDLUNGSVERFAHREN ZUR BILDUNG DES BESCHICHTUNGSFILMS
COMPOSITION DE REVÊTEMENT ANTI-TACHE, PROCÉDÉ DE PRODUCTION DE LA COMPOSITION, FILM DE REVÊTEMENT ANTI-TACHE FORMÉ EN UTILISANT LA COMPOSITION, ARTICLE REVÊTU COMPORTANT LE FILM DE REVÊTEMENT SUR LA SURFACE ET PROCÉDÉ DE TRAITEMENT ANTI-TACHE POUR FORMER LE FILM DE REVÊTEMENT

(30) Priority: 27.02.2007 WO PCT/JP2007/053591
(43) Date of publication of application: 02.12.2009
(73) Proprietor: Nitto Kasei Co., Ltd., Osaka-shi Osaka 533-0031 (JP)
(72) Inventor: WAKU, Hidenori, Osaka-shi, Osaka 5330031 (JP); MORI, Kiyomi, Osaka-shi, Osaka 5330031 (JP); OKA, Masayuki, Osaka-shi, Osaka 533-0031 (JP); FUJIMOTO, Takayoshi, Osaka-shi, Osaka 533-0031 (JP)
(74) Representative: Vossius & Partner
(86) International application number: PCT/JP2007/072574
(87) International publication number: WO 2008/105122

(56) References cited:
- WO-A1-96/38508
- JP-A- 2000 510 891
- JP-A- 2003 252 931
- JP-A- 2003 261 628
- JP-A- 2005 082 725
- JP-A- 2006 503 115

## Description

### TECHNICAL FIELD

The present invention relates to an antifouling coating composition, a method for producing the composition, an antifouling coating film formed using the composition, a coated object having the coating film on its surface, and a method of antifouling treatment by formation of the coating film.

### BACKGROUND ART

Aquatic fouling organisms such as barnacles, Tubeworms, common mussels, *Bugula neritina,* sea squirts, green laver, sea lettuce, and slimes attach to ships (especially the ship bottoms), fishing tools such as fishing nets and fishing net accessories, and structures submerged in seawater such as power plant aqueducts, leading to dysfunction, impaired appearances, and other problems of the ships and so on.

The attachment of aquatic fouling organisms has been heretofore prevented by coating surfaces of ships, fishing tools, and submerged structures with antifouling coating materials that include organic tin-containing copolymers. For example, a coating film formed by application of an antifouling coating material that contains a polymer with tributyltin groups gradually dissolves the polymer component into seawater, causing constant replacement of coating film surfaces, which enables the prevention of the attachment of aquatic fouling organisms to the coating film. After dissolution, the coating film can be reapplied to exhibit continued antifouling performance. However, the use of these antifouling coating materials has now been abandoned due to problems with marine pollution.

Triorganosilyl ester-containing copolymers with triorganosilyl groups, which are less toxic and less environmentally harmful than organic tin groups, have recently been developed and used as hydrolyzable copolymers to replace organic tin-containing copolymers (Patent Documents 1 to 15). However, although a coating film that includes a triorganosilyl ester-containing copolymer dissolves in seawater at a constant rate for a certain initial period of time, the dissolving rate of the coating film gradually increases after a long period of time has elapsed, making the design of the coating material difficult. For this reason, a triorganosilyl ester-containing copolymer is used in combination with rosin, a rosin derivative, or a metal salt thereof (Patent Documents 5 to 13). The use of this copolymer in combination with a rosin, a rosin derivative, or a metal salt thereof allows the coating film to dissolve stably for a long period of time, thus facilitating the design of the coating film.

When rosin or a rosin derivative is used, during the manufacture or storage of a coating material, a portion of the free carboxylic acid in the rosin or rosin derivative reacts with a metal compound contained in the antifouling coating composition, producing water together with a metal salt. Therefore, when the antifouling coating material is stored for a long period of time, the triorganosilyl ester-containing copolymer is gradually hydrolyzed by the produced water to form a salt with the metal contained in the coating material, causing the copolymers to crosslink with the metal, and hence, the viscosity of the coating material to increase. Even if the coating material is diluted with a thinner before use for ease of application, a coating film formed using this coating material exhibits poor physical properties and antifouling effects. Thus, the use of an inorganic dehydrating agent, in addition to the rosin or rosin derivative, has been proposed (Patent Documents 2, 8 to 11, and 14). When an inorganic dehydrating agent is used, a certain degree of dehydration can be achieved if the rosin content is low; however, the above-mentioned difficulty with designing the coating material cannot be avoided. If the rosin content is high, sufficient dehydration cannot be achieved, resulting in an inability to prevent increases in the viscosity of the coating material.

It is also noted that rosin, rosin derivatives, or metal salts thereof have varying degrees of dissolution in seawater, depending on the type (e.g., the type of the metal). Depending on the manufacturing conditions, storage conditions, etc. of the antifouling coating material, the proportion of the rosin or the like contained therein and the type of the metal salt also vary. For these reasons, it is difficult to design a coating film capable of dissolving stably at a reduced hydrolysis rate.

Especially in manufacturing coating materials for application to ship bottoms, large amounts of pigments such as cuprous oxide, zinc oxide, and red iron oxide are used. Plasticizers are therefore used in general to improve the physical properties, such as the adhesion and the resistance to cracking, of the coating films. Moreover, when large amounts of rosin, rosin derivatives, or metal salts thereof are used, the coating films become brittle without using plasticizers, and are easily subject to cracking and/or peeling.

Examples of conventionally used plasticizers include phosphate esters (e.g., tricresyl phosphate), phthalate esters (e.g., dioctyl phthalate), adipate esters (e.g., dioctyl adipate), polybutene, epoxidized fats and oils (e.g., epoxidized soybean oil), alkyl vinyl ether polymers (e.g., product name Lutonal A25, an ethyl vinyl ether polymer; BASF), chlorinated paraffins, etc.

However, although the use of plasticizers such as tricresyl phosphate, dioctyl phthalate, and dioctyl adipate improves the physical properties of coating films to some extent during the initial period of coating film formation, it is difficult to maintain the physical properties and solubility of the coating films in seawater over an extended period of time. That is, because the plasticizers gradually leach from the coating films, the coating films become brittle and subject to cracking and/or peeling, possibility failing to exhibit an antifouling effect.

Moreover, in the event of cracks or peeling in the coating film, it is difficult to directly apply the antifouling coating composition on top of the coating film (i.e., poor recoatability). Therefore, the maintenance of continued antifouling performance requires complicated and costly operations, such as the complete removal of the coating film, followed by the re-formation of a coating film.

Furthermore, the use of plasticizers such as polybutene and Lutonal A25 degrades the water resistance, causing the coating films to be easily blistered, peeled, and the like after being used for a long period of time.

The use of chlorinated paraffins as plasticizers has also been proposed (Patent Documents 3 and 4); however, chlorinated paraffins, which are organochlorine compounds, are highly toxic and problematic in terms of environmental safety.

Furthermore, antifouling coating compositions containing triorganosilyl ester-containing copolymers that include (meth)acrylate polymers have been proposed (Patent Documents 1 to 4, and 15). In these patent documents, however, (meth)acrylate polymers are used as co-binders, and improvements in physical properties such as adhesion and resistance to cracking are not basically obtained as when using plasticizers.
Patent Document 1: Japanese Unexamined Patent Publication No. 8-269390
Patent Document 2: Japanese Unexamined Patent Publication No. 9-48946
Patent Document 3: Japanese Unexamined Patent Publication No. 9-48947
Patent Document 4: Japanese Unexamined Patent Publication No. 9-194790
Patent Document 5: Japanese Unexamined Patent Publication No. 10-30071
Patent Document 6: Japanese Unexamined Patent Publication No. 11-116857
Patent Document 7: Japanese Unexamined Patent Publication No. 11-116858
Patent Document 8: Japanese Unexamined Patent Publication No. 2000-248228
Patent Document 9: Japanese Unexamined Patent Publication No. 2000-265107
Patent Document 10: Japanese Unexamined Patent Publication No. 2001-26729
Patent Document 11: EP 1016681 A2
Patent Document 12: Japanese Unexamined Patent Publication No. 2002-53796
Patent Document 13: Japanese Unexamined Patent Publication No. 2002-53797
Patent Document 14: Japanese Unexamined Patent Publication No. 2003-261816
Patent Document 15: Japanese Unexamined Patent Publication No. 2006-503115

### DISCLOSURE OF THE INVENTION

### Problem to be Solved by the Invention

An object of the present invention is to provide a composition for forming an antifouling coating film that is highly environmentally friendly and effectively exhibits an antifouling effect in seawater for a long period of time.

### Means for Solving the Problem

The present inventors conducted extensive research to solve the above problem, and found that the above object can be achieved by using a composition containing a specific plasticizer. The present invention has been accomplished based on this finding.

The present invention provides the below-described antifouling coating composition, method for producing the composition, antifouling coating film formed using the composition, coated object having the coating film on its surface, and a method of antifouling treatment by formation of the coating film.
Item 1. An antifouling coating composition comprising:
   (1) a polymeric plasticizer comprising an ethylenically unsaturated carboxylate polymer having a glass transition temperature of not greater than -20°C and a number average molecular weight of 500 to 20,000;
   (2) a triorganosilyl (meth)acrylate copolymer, which is a copolymer of triorganosilyl (meth)acrylate monomer A represented by General Formula (I): 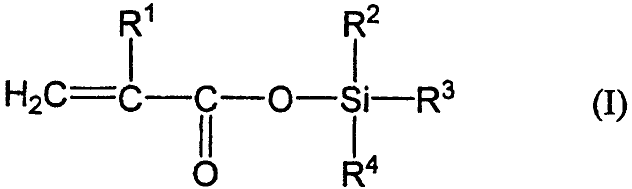 wherein R¹ represents a hydrogen atom or methyl group, and R² to R⁴ may be the same or different independently and represent a branched alkyl group having 3 to 8 carbon atoms or phenyl group, with
      ethylenically unsaturated monomer B other than the monomer A, the triorganosilyl (meth)acrylate copolymer having a glass transition temperature of not less than 0°C and a number average molecular weight of 5,000 to 100,000; and
   (3) an antifoulant.
Item 2. The antifouling coating composition according to Item 1, wherein the polymeric plasticizer is a (meth)acrylate polymer having a glass transition temperature of not greater than -40°C and a number average molecular weight of 1,000 to 10,000.
Item 3. The antifouling coating composition according to Item 2, wherein the (meth)acrylate polymer is a copolymer of a triorganosilyl (meth)acrylate monomer and a (meth)acrylate monomer other than the triorganosilyl (meth)acrylate monomer.
Item 4. The antifouling coating composition according to Item 1, wherein the monomer A is triisopropylsilyl (meth)acrylate.
Item 5. The antifouling coating composition according to Item 1, which further comprises at least one salt selected from the group consisting of rosin zinc salts, zinc salts of rosin derivatives, rosin copper salts and copper salts of rosin derivatives.
Item 6. The antifouling coating composition according to Item 5, which comprises 1 to 100 parts by weight of the polymeric plasticizer (1) per 100 parts by weight of the total amount of the copolymer (2) and the salt.
Item 7. The antifouling coating composition according to Item 1, which further comprises a dehydrating agent and/or dehumidifier.
Item 8. A method of antifouling treatment comprising the step of:
   forming an antifouling coating film on the surface of an object to be coated using the antifouling coating composition of Item 1.
Item 9. An antifouling coating film formed using the antifouling coating composition of Item 1.
Item 10. An antifouling coated object having the coating film of Item 9 on its surface.
Item 11. A method for producing an antifouling coating composition comprising the step of:
   mixing and dispersing a mixture of (1) a polymeric plasticizer comprising an ethylenically unsaturated carboxylate polymer having a glass transition temperature of not greater than -20°C and a number average molecular weight of 500 to 20,000;
   (2) a triorganosilyl (meth)acrylate copolymer, which is a copolymer of triorganosilyl (meth)acrylate monomer A represented by General Formula (I): 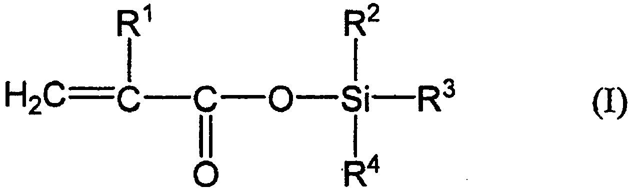 wherein R¹ represents a hydrogen atom or methyl group, and R² to R⁴ may be the same or different independently and represent a branched alkyl group having 3 to 8 carbon atoms or phenyl group, with
   ethylenically unsaturated monomer B other than the monomer A, the triorganosilyl (meth)acrylate copolymer having a glass transition temperature of not less than 0°C and a number average molecular weight of 5,000 to 100,000; and
   (3) an antifoulant.

The antifouling coating composition of the present invention comprises:
(1) a polymeric plasticizer comprising an ethylenically unsaturated carboxylate polymer having a glass transition temperature of not greater than -20°C and a number average molecular weight of 500 to 20,000;
(2) a triorganosilyl (meth)acrylate copolymer, which is a copolymer of triorganosilyl (meth)acrylate monomer A represented by General Formula (I): 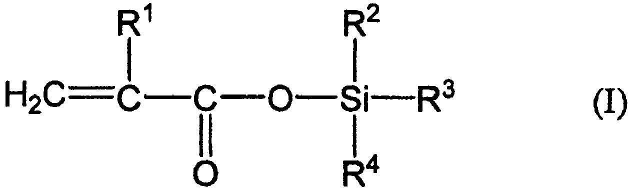 wherein R¹ represents a hydrogen atom or methyl group, and R² to R⁴ may be the same or different independently and represent a branched alkyl group having 3 to 8 carbon atoms or phenyl group, with
   ethylenically unsaturated monomer B other than the monomer A, the triorganosilyl (meth)acrylate copolymer having a glass transition temperature of not less than 0°C and a number average molecular weight of 5,000 to 100,000; and
(3) an antifoulant.

### (1) Polymeric plasticizer

The antifouling coating composition of the present invention comprises a polymeric plasticizer consisting of an ethylenically unsaturated carboxylic ester polymer having a glass transition temperature (Tg) of generally not greater than -20°C, preferably not greater than -40°C and more preferably not greater than -50°C, and a number average molecular weight of generally 500 to 20,000, and preferably 1,000 to 10,000.

If the Tg exceeds -20°C, it is impossible to provide the composition of the present invention with satisfactory plasticity. Therefore, the resulting coating film becomes brittle, and cracking and peeling occur easily. This also results in unsatisfactory adhesiveness to the object to be coated. When the Tg is not greater than -40°C, it is possible to more reliably provide plasticity to the composition of the present invention, obtaining improved adhesiveness, anti-cracking properties, etc.

When a polymeric plasticizer having a number average molecular weight (Mn) of less than 500 is used, after being in contact with seawater for a long time, the polymeric plasticizer is lost from the coating film first, making the coating film brittle. A polymeric plasticizer having an Mn exceeding 20,000 cannot provide the composition of the present invention with satisfactory plasticity. This makes the resulting coating film brittle, and cracking and peeling easily occur. Furthermore, the resulting coating film has unsatisfactory adhesiveness to the object to be coated. In this case, by increasing the amount of the polymeric plasticizer, the problem can be effectively avoided. However, if the amount of the polymeric plasticizer is unduly large, the hydrolysis rate of the coating film remarkably decreases. This hinders the coating film from effectively exhibiting the antifouling effect. When the Mn falls within the range from 1,000 to 10,000, it is possible to provide plasticity to the composition of the present invention more reliably. This reduces the necessary amount of the polymeric plasticizer added, and the resulting coating film can effectively exhibit the antifouling effect.

Examples of the polymeric plasticizers include (meth)acrylate polymer, maleate polymer, fumarate polymer, etc. These plasticizers may be used singly or in combination. Among these polymeric plasticizers, (meth)acrylate polymer is preferable, and acrylate polymer is particularly preferable.

The term (meth)acrylate polymer means acrylic ester polymer or methacryllic ester polymer.

The polymeric plasticizer may be a polymer obtained by polymerizing a single monomer, or a copolymer obtained by copolymerizing two or more monomers. When the polymeric plasticizer is a copolymer, the polymeric plasticizer may be an alternating copolymer, a periodic copolymer, or a block copolymer.

Preferable examples of the monomers forming the polymeric plasticizers include methyl (meth)acrylate, ethyl (meth)acrylate, butyl (meth)acrylate, 2-ethylhexyl (meth)acrylate, lauryl (meth)acrylate, stearyl (meth)acrylate, 2-methoxyethyl (meth) acrylate, 2-ethoxyethyl (meth)acrylate, 2-ethoxyethoxyethyl (meth)acrylate, 2-phenoxyethyl (meth)acrylate, 2-methoxypropyl (meth)acrylate, 4-methoxybutyl (meth)acrylate, 4-methoxybutyl (meth)acrylate, benzyl acrylate, phenyl (meth)acrylate, triorganosilyl (meth)acrylate and like (meth)acrylic esters. Particularly preferable examples thereof include methyl acrylate, ethyl acrylate, butyl acrylate, 2-ethylhexyl acrylate, lauryl acrylate, stearyl acrylate, 2-methoxyethyl acrylate, 2-ethoxyethyl acrylate, 2-ethoxyethoxyethyl acrylate, 2-phenoxyethyl acrylate, 2-methoxypropyl acrylate, 4-methoxybutyl acrylate, 4-methoxybutyl acrylate, benzyl acrylate, phenyl acrylate, triorganosilyl acrylate and like acrylic esters.

The term (meth)acrylate means acrylic esters or methacrylic esters.

It is preferable to use a polymeric plasticizer that is highly compatibility with the triorganosilyl (meth)acrylate copolymer (and salts explained below). It is also preferable to use a polymeric plasticizer that does not separate in an organic solvent. Use of a polymeric plasticizer that can maintain the homogeneous condition of the coating film even when the coating film is dried is particularly preferable. Here, the "homogeneous condition of the coating film" means that the dried coating film is free from partial cloudiness or partial transparency, i.e., an inhomogeneous condition (so-called sea-island structure). In other words, the "homogeneous condition of the coating film" indicates the condition in which the entire dried coating film is colorless and transparent, or uniformly cloudy.

For example, when a triorganosilyl (meth)acrylate monomer is used as a monomer to form the (meth)acrylate polymer, which is a polymeric plasticizer, the (meth)acrylate polymer is preferably obtained by copolymerizing a triorganosilyl (meth)acrylate monomer with a (meth)acrylate monomer other than the triorganosilyl (meth)acrylate monomer. In particular, the (meth)acrylate polymer is preferably obtained by copolymerizing generally 1 to 30 weight%, preferably 1 to 10 weight%, and more preferably 1 to 5 weight% of triorganosilyl (meth)acrylate monomer with generally 70 to 99 weight%, preferably 90 to 99 weight%, and more preferably 95 to 99 weight of a (meth)acrylate monomer other than the triorganosilyl (meth)acrylate monomer. From the viewpoint of the cost, the preferable amount of the triorganosilyl (meth)acrylate monomer used is not greater than 10 weight%.

The polymeric plasticizer may be obtained, for example, by polymerizing the monomers in the presence of a polymerization initiator.

Examples of polymerization initiators used in the polymerization reaction include 2,2'-azobisisobutyronitrile (AIBN), 2,2'-azobis-2-methylbutyronitrile, dimethyl-2,2'-azobisisobutyrate and like azo compounds; and benzoyl peroxide, di-*tert*-butyl peroxide, *tert*-butyl peroxybenzoate, *tert*-butyl peroxyisopropylcarbonate, *tert*-butyl peroxyoctoate and like peroxides. These polymerization initiators may be used singly or in combination. Among the above examples, *tert*-butyl peroxyoctoate is particularly preferable.

By suitably selecting the amount of the polymerization initiator used, the molecular weight of ethylenically unsaturated carboxylate polymer, which is a polymeric plasticizer, can be suitably adjusted.

In order to accurately and easily obtain the polymeric plasticizer, conducting solution polymerization or high temperature bulk polymerization is preferable. In the case of solution polymerization, α-methyl styrene dimer or the like polymerization regulator may be added.

The reaction temperature in the solution polymerization reaction may be suitably selected depending on the type of the polymerization initiator, etc., but is generally 70 to 140°C, and preferably 80 to 120°C. The time necessary for the polymerization reaction may be suitably selected depending on the reaction temperature, etc., but is generally about 4 to 8 hours. The solution polymerization reaction is preferably conducted in inert gas atmospheres, such as nitrogen gas and argon gas.

The reaction temperature in the high temperature bulk polymerization is preferably 200 to 300°C. The time necessary for the polymerization reaction may be suitably selected depending on the reaction temperature, etc.

### (2) Triorganosilyl (meth)acrylate copolymer

The triorganosilyl (meth)acrylate copolymer (hereunder sometimes referred to as Copolymer (2)) is a copolymer of triorganosilyl (meth)acrylate monomer A (hereunder sometimes referred to as "Monomer A") represented by General Formula (I) with an ethylenically unsaturated monomer B (hereunder sometimes referred to as "Monomer B") other than the Monomer A.

The term triorganosilyl (meth)acrylate copolymer means triorganosilyl acrylate copolymer, or triorganosilyl methacrylate copolymer. The term triorganosilyl (meth) acrylate monomer A means triorganosilyl acrylate monomer A, or triorganosilyl methacrylate monomer A.

In General Formula (I), R² to R⁴ may be the same or different independently and represent a branched alkyl group having 3 to 8 carbon atoms or phenyl group. Examples of branched alkyl groups having 3 to 8 carbon atoms include isopropyl group, isobutyl group, s-butyl group, *t*-butyl group, 2-methylbutyl group, 2-ethylbutyl group, 3-methylpentyl group, etc. Preferable examples of R² to R⁴ include isopropyl group, *s*-butyl group, *t-*butyl group and phenyl group. Among these, isopropyl group is particularly preferable.

Examples of Monomers A include triisopropylsilyl (meth)acrylate, triisobutylsilyl (meth)acrylate, tri-*s*-butylsilyl (meth) acrylate, triisopentylsilyl (meth)acrylate, triphenylsilyl (meth)acrylate, diisopropylisobutylsilyl (meth)acrylate, diisopropyl-*s*-butylsilyl (meth)acrylate, diisopropylisopentylsilyl (meth)acrylate, diisopropylphenylsilyl (meth)acrylate, isopropyldiisobutylsilyl (meth)acrylate, isopropyldi-*s*-butylsilyl (meth)acrylate, t-butyldiisobutylsilyl (meth)acrylate, t-butyldiisopentylsilyl (meth)acrylate, t-butyldiphenylsilyl (meth)acrylate, etc. Among these, triisopropylsilyl (meth)acrylate, tri-s-butylsilyl (meth) acrylate, *t*-butyldiphenylsilyl (meth)acrylate, etc., are preferable. These Monomers A may be used singly or in combination.

From the viewpoint of production process, production cost, availability of raw materials, and environmental safety, triisopropylsilyl (meth)acrylate wherein all of the R² to R⁴ are isopropyl group is preferable as the Monomer A.

Monomer B is an ethylenically unsaturated monomer other than Monomer A. Specific examples thereof include (meth)acrylic esters, vinyl compounds, aromatic compounds, dialkyl ester compounds of dibasic acid, etc. In the Specification, (meth)acrylic ester means acrylic ester, or metacrylic ester.

Examples of (meth)acrylic esters include methyl (meth)acrylate, ethyl (meth)acrylate, butyl (meth)acrylate, 2-ethylhexyl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, etc.

Examples of vinyl compounds include vinyl chloride, vinylidene chloride, acrylonitrile, methacrylonitrile, vinyl acetate, vinyl benzoate, vinyl butyrate, butyl vinyl ether, lauryl vinyl ether, *N*-vinyl pyrrolidone and like vinyl compounds having at least one functional group.

Examples of aromatic compounds include styrene, vinyl toluene, α-methyl styrene, etc.

Examples of dialkyl ester compounds of dibasic acid include dimethyl maleate, dibutyl maleate, dimethyl fumarate, etc.

In the present invention, these Monomers B may be used singly or in combination. A preferable example of Monomer B is (meth)acrylic ester; and methyl methacrylate, butyl (meth)acrylate, 2-methoxyethyl (meth)acrylate and the like are particularly preferable.

The preferable form of Copolymer (2) contained in the composition of the present invention is a copolymer of at least one Monomer A selected from the group consisting of triisopropylsilyl (meth)acrylate, tri-*s*-butylsilyl (meth)acrylate and t-butyldiphenylsilyl (meth)acrylate, with at least one Monomer B selected from the group consisting of methyl methacrylate, ethyl (meth)acrylate, butyl (meth)acrylate, 2-methoxypropyl (meth)acrylate and 2-methoxyethyl (meth)acrylate.

It is preferable that Copolymer (2) be obtained by copolymerizing 30 to 65 weight% of Monomer A and 35 to 70 weight% of Monomer B. When the content of Monomer A falls within the range of 30 to 65 weight%, the desired antifouling effect can be effectively obtained, and the hydrolysis rate of the coating film can be suitably controlled, maintaining the desirable antifouling effect for a long time.

The glass transition temperature (Tg) of Copolymer (2) is generally not less than 0°C, preferably not less than 20°C and more preferably not less than 30°C. If the Tg of Copolymer (2) is less than 0°C, the resulting coating film tends to become brittle. If the coating film is brittle, tracks of blocks clearly remain when coating, or cold flow easily occurs, depending on the temperature (in particular, when the atmospheric temperature is high, cold flow easily occurs), when a ship having the coating film on its bottom sails at a high speed.

The number average molecular weight (Mn) of Copolymer (2) is generally 5,000 to 100,000, and preferably 10,000 to 50,000. If the Mn is less than 5,000, the resulting coating film tends to become brittle. If the number average molecular weight exceeds 100,000, the coating film barely dissolves in seawater, preventing the desired antifouling effect from being effectively exhibited.

One example of the method for the measurement of the Mn is gel permeation chromatography (GPC).

Copolymer (2) may be a random copolymer, an alternating copolymer, a periodic copolymer, or a block copolymer of Monomer A and Monomer B.

Copolymer (2) may be obtained by, for example, polymerizing Monomer A and Monomer B in the presence of a polymerization initiator.

Examples of polymerization initiators used in the polymerization reaction include 2,2'-azobisisobutyronitrile (AIBN), 2,2'-azobis-2-methylbutyronitrile, dimethyl-2,2'-azobisisobutyrate and like azo compounds; and benzoyl peroxide, di-*tert*-butyl peroxide, *tert*-butyl peroxybenzoate, *tert*-butyl peroxyisopropylcarbonate, *tert*-butyl peroxyoctoate and like peroxides. These polymerization initiators may be used singly or in combination. Among the above examples, AIBN and *tert*-butyl peroxyoctoate are particularly preferable.

By suitably selecting the amount of the polymerization initiator used, the molecular weight of the triorganosilyl (meth)acrylate copolymer can be suitably adjusted.

Examples of polymerization methods include solution polymerization, bulk polymerization, emulsion polymerization, suspension polymerization, etc. Among these, solution polymerization is preferable, because it allows Copolymer (2) to be prepared easily and accurately.

In the polymerization reaction, an organic solvent may be added, if necessary. Examples of organic solvents include xylene, toluene and like aromatic hydrocarbon-based solvents; hexane, heptane and like aliphatic hydrocarbon-based solvents; ethyl acetate, butyl acetate, isobutyl acetate, methoxypropyl acetate and like ester-based solvents; isopropyl alcohol, butyl alcohol and like alcohol-based solvents; dioxane, diethyl ether, dibutyl ether and like ether-based solvents; methyl ethyl ketone, methyl isobutyl ketone and like ketone-based solvents; etc. Among these, aromatic hydrocarbon-based solvents are preferable, and xylene is particularly preferable. These solvents may be used singly or in combination.

The reaction temperature in the polymerization reaction may be suitably selected depending on the type of the polymerization initiator, etc., but is generally 70 to 140°C, and preferably 80 to 120°C. The time necessary for the polymerization reaction may be suitably selected depending on the reaction temperature, etc., but is generally about 4 to 8 hours.

The polymerization reaction is preferably conducted in inert gas atmospheres, such as nitrogen gas and argon gas.

### (3) Antifoulant

There is no limitation to the antifoulants as long as they have a killing or repelling effect against aquatic fouling organisms. For example, inorganic antifoulants and organic antifoulants are usable.

Examples of inorganic antifoulants include cuprous oxide, copper thiocyanate (general name: copper rhodanide), cupronickel, copper powder, etc. Among these, cuprous oxide and copper rhodanide are particularly preferable.

Examples of the organic antifoulants include 2-mercaptopyridine-*N*-oxide copper general name: copper pyrithione) and like organic copper compounds; 2-mercaptopyridine-*N*-oxide zinc (general name: zinc pyrithione), zinc ethylenebisdithiocarbamate (general name: zineb), zinc bis(dimethyldithiocarbamate) (general name: ziram), bis(dimethyl dithiocarbamoyl) zinc ethylene bis(dithio carbamate) (general name: polycarbamate) and like organic zinc compounds; pyridine-triphenylborane, 4-isopropyl pyridyl-diphenylmethyl borane, 4-phenyl pyridiyl-diphenyl borane, triphenylboron-*n*-octadecyl amine, triphenyl[3-(2-ethylhexyloxy)propyl amine]boron and like organic boron compounds; and 2,4,6-trichloromaleimide, *N*-(2,6-diethylphenyl)-2,3-dichloromaleimide and like maleimide compounds. Other examples of the organic antifoulants include 4,5-dichloro-2-*n*-octyl-3-isothiazolone (general name: Sea-Nine 211), 3,4-dichlorophenyl-*N*-*N*-dimethylurea (general name: diuron), 2-methylthio-4-*t*-butylamino-6-cyclopropylamino-*s*-triazine (general name: Irgarol 1051), 2,4,5,6-tetrachloroisophthalonitrile (general name: chlorothalonil), *N*-dichlorofluoromethylthio-*N*',*N*'-dimethyl-*N*-*p*-tolylsulfamide (general name: tolylfluanid), *N-*dichloromethylthio-*N*',*N*'-dimethyl-*N*-phenylsulfamide (general name: dichlofluanid), 2-(4-thiazolyl)benzimidazole (general name: thiabendazole), 3-(benzo[b]thien-2-yl)-5,6-dihydro-1,4,2-oxathiazine-4-oxide (general name: bethoxazine), 2-(*p-*chlorophenyl)-3-cyano-4-bromo-5-trifluoromethyl pyrrole (general name: Econea 028), etc. Among these, zinc pyrithione, copper pyrithione, pyridine-triphenylborane, 4-isopropylpyridyl-diphenylmethyl borane, bethoxazine, zineb, Sea-Nine 211 and Irgarol 1051 are preferable, and copper pyrithione, zinc pyrithione, pyridine-triphenylborane, bethoxazine and Sea-Nine 211 are particularly preferable.

These antifoulants may be used singly or in combination.

### Rosin Salt and Rosin Derivative Salt

It is preferable that the antifouling coating composition of the present invention further contain a rosin salt and/or rosin derivative salt. Because the rosin salt and rosin derivative salt have high compatibility with the polymeric plasticizer, they can stably exist in the coating film, providing excellent long-term storageability to the composition of the present invention.

It is preferable that the rosin salt and rosin derivative salt be at least one salt selected from the group consisting of rosin zinc salts, zinc salts of rosin derivatives, rosin copper salts and copper salts of rosin derivatives.

Rosin copper salt (and rosin derivative copper salt) has a lower solubility in water than rosin zinc salt (and rosin derivative zinc salt). In the present invention, by suitably selecting the types and amounts of the zinc salt and the copper salt used, the hydrolysis rate of the coating film can be desirably controlled so that a coating film that exhibits a stable dissolving rate can be obtained. When the composition of the present invention is used, for example, as a coating for a ship bottom, it is preferable that the weight ratio of the zinc salt to the copper salt in the composition is 100:0 to 20:80.

Examples of rosin zinc salts (or copper salts) include gum rosin zinc salt (or copper salt), wood rosin zinc salt (or copper salt), tall oil rosin zinc salt (or copper salt), etc. These salts may be used singly or in combination.

Examples of zinc salts (or copper salts) of rosin derivatives include maleinized rosin zinc salts (or copper salts), formylated rosin zinc salts (or copper salts), polymerized rosin zinc salts (or copper salts), hydrogenated rosin zinc salts (or copper salts), disproportionated rosin zinc salts (or copper salts), etc. These salts may be used singly or in combination.

It is preferable that the composition of the present invention contain at least one salt selected from the group consisting of gum rosin zinc salts (or copper salts), wood rosin zinc salts (or copper salts), tall oil rosin zinc salts (or copper salts), hydrogenated rosin zinc salts (or copper salts) and disproportionated rosin zinc salts (or copper salts). Among these, containing at least one salt selected from the group consisting of gum rosin zinc salts (or copper salts), hydrogenated rosin zinc salts (or copper salts) and disproportionated rosin zinc salts (or copper salts) is more preferable; and containing at least one salt selected from the group consisting of gum rosin zinc salts, hydrogenated rosin zinc salts and disproportionated rosin zinc salts is particularly preferable.

The rosin salts and the rosin derivative salts may be commercially available ones. Alternatively, the rosin salts and the rosin derivative salts may be produced by a known method. For example, the rosin (or rosin derivative) zinc salts can be prepared by reacting rosin (or a rosin derivative) having a free carboxyl group (COO⁻ group) with a zinc oxide while heating in a solution.

### Antifouling Coating Composition

The antifouling coating composition of the present invention contains the above-described polymeric plasticizer, Copolymer (2), and the antifoulant.

The antifouling coating composition of the present invention is preferably a composition that comprises:
(1) a polymeric plasticizer formed of an ethylenically unsaturated carboxylate ploymer having a glass transition temperature of not greater than -40°C and a number average molecular weight of 1,000 to 10,000;
(2) a triorganosilyl (meth)acrylate copolymer, which is a copolymer of at least one Monomer A selected from the group consisting of triisopropylsilyl (meth)acrylate, tri-s-butylsilyl (meth)acrylate and t-butyldiphenylsilyl (meth)acrylate, with at least one Monomer B selected from the group consisting of methyl methacrylate, ethyl (meth)acrylate, butyl (meth)acrylate, 2-methoxyethyl (meth)acrylate and 2-methoxypropyl (meth)acrylate, wherein the copolymer can be obtained by copolymerizing 30 to 65 weight% of Monomer A and 35 to 70 weight% of Monomer B, which has a Tg of not less than 20°C and an Mn of 10,000 to 50,000; and
(3) at least one antifoulant selected from the group consisting of cuprous oxide, copper rhodanide, zinc pyrithione, copper pyrithione, pyridine-triphenylborane, 4-isopropylpyridyl-diphenylmethyl borane, bethoxazine, zineb, Sea-Nine 211 and Irgarol 1051.

The antifouling coating composition of the present invention is more preferably a composition that comprises:
(1) a polymeric plasticizer formed of an ethylenically unsaturated carboxylate ploymer having a glass transition temperature of not greater than -50°C and a number average molecular weight of 2,000 to 4,000;
(2) a triorganosilyl (meth)acrylate copolymer, which is a copolymer of triisopropylsilyl (meth)acrylate (Monomer A) with at least one Monomer B selected from the group consisting of methyl methacrylate, butyl acrylate and 2-methoxyethyl (meth)acrylate, wherein the copolymer is obtained by copolymerizing 30 to 65 weight% of Monomer A and 35 to 70 weight% of Monomer B, and the copolymer has a Tg of not less than 30°C and an Mn of 16,000 to 20,000;
(3) at least one antifoulant selected from the group consisting of cuprous oxide, copper rhodanide, zinc pyrithione, copper pyrithione, pyridine-triphenylborane, bethoxazine and Sea-Nine 211; and
(4) at least one salt selected from the group consisting of rosin zinc salts, zinc salts of rosin derivatives, rosin copper salts and copper salts of rosin derivatives.

There is no limitation to the content of the polymeric plasticizer (1) in the antifouling coating composition of the present invention, but the content is preferably 1 to 100 parts by weight, and more preferably 10 to 50 parts by weight per 100 parts by weight of the total amount of the copolymer (2) and the salt. If the content of the polymeric plasticizer (1) is less than 1 part by weight per 100 parts by weight of the total amount of the copolymer (2) and the salt, it is impossible to provide satisfactory plasticity to the composition of the present invention. This makes the resulting coating film brittle, and cracking or peeling occurs easily. If the content of the polymeric plasticizer (1) exceeds 100 parts by weight per 100 parts by weight of the total amount of the copolymer (2) and the salt, the resulting coating film becomes too soft. This may cause cold flow or other defects in the resulting coating film in high temperature seawater, and is thus unpractical. When the content of the polymeric plasticizer (1) falls within the range of 1 to 100 parts by weight per 100 parts by weight of the total amount of the copolymer (2) and the salt, the coating film will have a desirable hardness, and therefore cold flow or other defects will occur very little, effectively preventing cracking, peeling or other defects in the coating film while the ship is sailing.

The total content of Copolymer (2) and the rosin salt in the antifouling coating composition of the present invention is preferably 5 to 30 weight%, and more preferably 10 to 20 weight%. If the total content is less than 5 weight%, the resulting coating film will become brittle, and cracking or peeling will occur easily. If the total content exceeds 30 weight%, the renewability of the coating film becomes lower, making it difficult to exhibit the antifouling effect for a long time. This also hinders the antifouling effect from being sufficiently exhibited, particularly in sea areas where a great many fouling organisms exist.

The weight ratio between the content of Copolymer (2) and the content of the rosin salt (Copolymer (2) : rosin salt) is preferably 100:0 to 20:80, and more preferably 95:5 to 30:70. When the weight ratio falls within the range of 100:0 to 20:80, the resulting coating film will have the desired hardness and strength, exhibiting the excellent antifouling effect for a long time.

There is no limitation to the content of the antifoulant in the antifouling coating composition of the present invention, but it is preferably 1 to 80 weight%, and more preferably 5 to 70 weight% per total weight of the antifouling coating composition.

If the content of the antifoulant is less than 1 weight%, it is impossible to satisfactorily exhibit the antifouling effect. If the content of the antifoulant exceeds 80 weight%, the resulting coating film will become brittle and impracticable.

The antifouling coating composition of the present invention preferably further contains an agent for removing water in the composition (hereunder this agent may be referred to as a "dewatering agent"). Specifically, it is preferable to contain a dehydrating agent and/or a dehumidifier as a dewatering agent.

The dehydrating agent is a compound that can remove water in the coating composition by incorporating the water into the dehydrating agent as crystallization water. The dehumidifier is a compound that can remove water in the coating composition by reacting with water.

Examples of dehydrating agents include anhydrous gypsum, molecular sieves, magnesium sulfate, sodium sulfate, etc. Examples of the dehumidifiers include methyl orthoformate, ethyl orthoformate and like alkyl orthoformates; tetraethoxysilane, tetrabutoxysilane, tetraphenoxysilane, tetrakis(2-ethoxybutoxy)silane, methyltrimethoxysilane, dimethyldiethoxysilane, trimethylethoxysilane, diphenyldiethoxysilane and like alkoxysilanes; and maleic anhydride, phthalic anhydride and like acid anhydrides. Among these, anhydrous gypsum and tetraethoxysilane are particularly preferable. These dehydrating agents and dehumidifiers may be used singly or in combination.

There is no limitation to the content of the dewatering agent in the composition, but it is preferably 0.1 to 20 weight%, and more preferably 0.2 to 5 weight% per total weight of the antifouling coating composition. If the content of the dewatering agent is less than 0.1 weight%, the storage stability of the coating composition is practically unsatisfactory. If the content of the dewatering agent exceeds 20 weight%, the resulting coating film will become too weak for practical use.

The antifouling coating composition of the present invention may further contain a known pigment, a plasticizer other than those mentioned above, and a thixotropic agent.

Example of the usable pigments include zinc oxide, red iron oxide, talc, titanium oxide, silica, calcium carbonate, barium sulfate, calcium oxide, etc. These pigments may be used singly or in combination.

Examples of known plasticizers include tricresyl phosphate, trioctyl phosphate, triphenyl phosphate and like phosphate esters; dibutyl phthalate, dioctyl phthalate and like phthalate esters; dibutyl adipate, dioctyl adipate and like adipate esters; dibutyl sebacate, dioctyl sebacate and like sebacate esters; epoxidized soybean oil, epoxidized linseed oil and like epoxidized oils and fats; methyl vinyl ether polymer, ethyl vinyl ether polymer and like alkyl vinyl ether polymers; polyethylene glycol, polypropylene glycol and like polyalkylene glycols; *t*-nonylpentasulfide, vaseline, polybutene, tris(2-ethylhexyl) trimellitate, silicone oil, liquid paraffin, chlorinated paraffin, etc. Among these, phosphoric esters and epoxidized oils and fats are preferable. These plasticizers may be used singly or in combination.

Examples of the thixotropic agents include bentonite, oxidized polyethylene, various amide compounds, etc. These thixotropic agents may be used singly or in combination. The thixotropic agent can be used by being dispersed in an organic solvent such as xylene or the like.

The composition of the present invention may further contain dye, antifoaming agent, etc., if necessary.

The composition of the present invention is usually dissolved or dispersed in an organic solvent. This makes the coating composition suitably usable. Examples of the usable organic solvents include xylene, toluene, mineral spirit, MIBK, butyl acetate, etc. Among these, xylene and MIBK are particularly preferable. These organic solvents may be used singly or in combination.

The antifouling coating composition of the present invention has excellent stability, and will therefore thicken, gelate or solidify very little even after a long period of storage.

### Method for Producing Antifouling Coating Composition

The method for producing the antifouling coating composition of the present invention is characterized in that it comprises the step of mixing and dispersing a mixture of:
(1) a polymeric plasticizer comprising an ethylenically unsaturated carboxylate polymer having a glass transition temperature of not greater than -20°C and a number average molecular weight of 500 to 20,000;
(2) a triorganosilyl (meth)acrylate copolymer, which is a copolymer of triorganosilyl (meth)acrylate monomer A represented by General Formula (I): 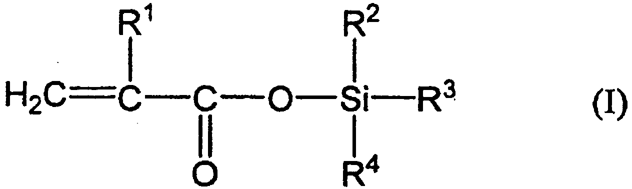 wherein R¹ represents a hydrogen atom or methyl group, and R² to R⁴ may be the same or different independently and represent a branched alkyl group having 3 to 8 carbon atoms or phenyl group, with
   ethylenically unsaturated monomer B other than the monomer A, the triorganosilyl (meth)acrylate copolymer having a glass transition temperature of not less than 0°C and a number average molecular weight of 5,000 to 100,000; and
(3) an antifoulant.

Specifically, the production method of the present invention allows the antifouling coating composition to be obtained by mixing and dispersing a mixture containing the polymeric plasticizer, Copolymer (2), and antifoulant.

There is not limitation to the contents of the polymeric plasticizer, the antifoulant, etc., in the mixture, and the contents may be suitably selected so that the resulting antifouling coating composition contains them in acceptable content ranges.

The mixture may contain the above-mentioned salts and pigments, etc., if necessary.

In the production method of the present invention, it is preferable that the mixture be mixed using a stirrer (a disper), etc., and then mixed and dispersed using a mill (a ball mill, sand mill, bead mill, Dyno mill, etc.). For example, the polymeric plasticizer, Copolymer (2), salt, antifoulant, dewatering agent, pigment and other additives are dissolved or dispersed in a solvent and then mixed, followed by mixing and dispersing the mixture using a mill. Examples of usable solvents include xylene, toluene, mineral spirit, MIBK, butyl acetate, etc. Among these, xylene is preferable. These solvents may be used singly or in combination.

### Method of Antifouling Treatment, Antifouling Coating Film, and Object to be coated

The method of antifouling treatment of the present invention is characterized in that an antifouling coating film is formed on the surface of the object to be coated using the above-explained antifouling coating composition. The method of antifouling treatment of the present invention can prevent adhesion of aquatic fouling organisms by the gradual dissolution of the surface of the antifouling coating film, so as to continually renew the surface of the coating film. After the complete dissolution of the coating film, the antifouling effect can be continuously exhibited by recoating the composition.

Examples of objects on which a coating film can be formed include ships (in particular, ship bottoms), fishing tools, structures submerged in seawater, etc. Examples of the fishing tools include fishing nets for use in aquaculture or in fixed netting, and fishing net accessories such as floats attached to fishing nets, ropes, etc. Examples of structures submerged in seawater include power plant aqueducts, bridges, port facilities, etc.

The antifouling coating film of the present invention can be formed by applying the antifouling coating composition to the surface (entirely or partially) of the object on which a coating film is formed. Examples of the coating method include brush coating, spray coating, dipping, flow coating, spin coating, etc. These coating methods may be employed singly or in combination.

The coating composition is dried after application. The drying temperature may be room temperature. The drying time may be suitably selected depending on the thickness of the coating film, etc.

The antifouling coating film of the present invention formed using the antifouling coating composition is advantageous in that:
1) Cracking, peeling or the like occurs very little even if it is in contact with seawater for a long time; 2) It has a suitable hardness, and therefore cold flow or other defects will occur very little in the resulting coating film; 3) It has a high adhesiveness to the object on which a coating film is formed; 4) It has excellent water resistance; and 5) It can effectively exhibit an antifouling effect for a long period of time, because it exhibits a desirably controlled hydrolysis rate.

The thickness of the antifouling coating film may be suitably selected depending on the type of object on which a coating film is formed, the navigation speed of the ship, the seawater temperature, etc. For example, when the object on which a coating film is formed is a ship bottom, the thickness of the antifouling coating film is generally 50 to 500 µm, and preferably 100 to 400 µm.

The antifouling coating film of the present invention has a suitable hardness. Specifically, the antifouling coating film of the present invention has a hardness that allows little cold flow or other defects. The object to be coated of the present invention has the antifouling coating film on its surface. The object to be coated of the present invention may have the antifouling coating film on the entire surface thereof, or a part thereof.

The coated object of the present invention is covered with the antifouling coating film having the characteristics of Items 1 to 5 described above. Therefore, it can be suitably applied to ships (in particular, ship bottoms), fishing tools, structures submerged in seawater, etc. For example, when the antifouling coating film is formed on the surface of a ship bottom, the antifouling coating film gradually dissolves from the surface, so that the coating film surface is always renewed. This prevents the adhesion of aquatic fouling organisms.

Furthermore, the hydrolysis rate of the antifouling coating film is desirably controlled. Therefore, ships benefit from the antifouling effect for a long period of time; additionally, even when the ships are not moving, for example, during anchorage, rigging, etc., the adhesion and incrustation of aquatic fouling organisms is barely observed, and the antifouling effect is exhibited for a long time.

The surface of the antifouling coating film is substantially free from cracking or peeling even after a long period of time. Therefore, it is unnecessary to re-form a new coating film after completely removing the existing coating film. In other words, by directly applying the antifouling coating film composition thereon, the antifouling coating film can be effectively formed. This makes it possible to continuously maintain the antifouling effect easily and at low cost.

### EFFECT OF THE INVENTION

The antifouling coating composition of the present invention can desirably control the hydrolysis rate of the coating film. Therefore, the coating film formed using the composition can maintain a stable antifouling effect for a long time. Furthermore, the composition of the present invention has excellent long-term storability. Specifically, the composition of the present invention thickens, gelates or solidifies very little even after long-term storage. Furthermore, the antifouling coating composition of the present invention is highly ecologically safe, and is substantially free from marine pollution, even if dissolved in seawater.

The antifouling coating film of the present invention formed using the antifouling coating composition is advantageous in that:
1) Cracking, peeling or the like occurs very little even if it is in contact with seawater for a long time; 2) It has a suitable hardness, and therefore cold flow or other defects will occur very little in the resulting coating film; 3) It has a high adhesiveness to the object on which a coating film is formed; 4) It has excellent water resistance; and 5) It can effectively exhibit an antifouling effect for a long period of time, because it exhibits a desirably controlled hydrolysis rate.

The coated object of the present invention has the characteristics of Items 1 to 5 described above. Therefore, it can be suitably applied to ships (in particular, ship bottoms), fishing tools, structures submerged in seawater, etc. For example, when the antifouling coating film is formed on the surface of a ship bottom, the antifouling coating film gradually dissolves from the surface, so that the coating film surface is always renewed. This prevents the adhesion of aquatic fouling organisms.

Furthermore, the antifouling coating film has a suitable solbility. Therefore, ships can benefit from the antifouling effect for a long period of time; additionally, when the ships are not moving, for example, during anchorage, rigging, etc., the adhesion and incrustation of aquatic fouling organisms is barely observed, and the antifouling effect is exhibited for a long time. This reduces the frictional resistance of the ships, and accordingly reduces the fuel cost while sailing.

Furthermore, the surface of the antifouling coating film is basically free from coating film defects, even after a long period of time. Therefore, after using the coated object for a predetermined period, a new antifouling coating film can be desirably formed by directly recoating the antifouling coating film composition thereon. This makes it possible to continuously maintain the antifouling effect in a simple and inexpensive manner.

### Examples

Features of the invention will be further clarified referring to the Examples, etc. shown below. The invention, however, is not limited by the Examples, etc. In each of the production examples, comparative production examples, examples, and comparative examples, "%" denotes "% by weight". Viscosity was determined at 25°C using a Brookfield viscometer. Number average molecular weight (Mn) was determined by gel permeation chromatography (GPC) (using a polystyrene standard). GPC was performed under the following conditions.

Equipment: HLC-8220GPC; Tosoh Corporation
Column: TSKgel Super HZM-M, two
Flow rate: 0.35 mL/min
Detector: RI
Column thermostat temperature: 40°C
Eluate: THF
The non-volatile content was determined by heating for 3 hours at 110°C.

In Table 1, the amounts of each ingredient are represented in grams, and the values in parentheses indicate the weight proportions of Monomers A or Monomers B relative to the total weight.

### Production Example 1 (Production of Copolymer (2)-1)

Three-hundred fifty grams of xylene was charged to a 1,000 ml flask equipped with a thermometer, a reflux condenser, a stirrer, and a dropping funnel, after which the contents were heated to 85 to 90°C while stirring in a nitrogen atmosphere, and a mixture containing 225 g of triisopropylsilyl acrylate, 200 g of methyl methacrylate, 25 g of n-butyl acrylate, 50 g of 2-methoxyethyl acrylate, and 4 g of AIBN (the first addition) was added dropwise into the flask over a period of 1 hour, with the contents maintained at 85 to 90°C. After the dropwise addition, the polymerization reaction was performed for 2 hours at 85 to 90°C. This was followed by the addition of 2 g of AIBN (the second addition) to continue the polymerization reaction for another 2 hours at 85 to 90°C, and 150 g of xylene was subsequently added and dissolved to produce Copolymer Solution (2)-1. Copolymer Solution (2)-1 had a viscosity of 460 mPa· s/25°C, a non-volatile content of 50.8%, a Mn of 17,000, and a Tg of 39°C (Table 1).

### Production Examples 2 to 6 and Comparative Production Examples 1 and 2 (Production of Copolymer Solutions (2)-2 to (2)-6 and H-1 to H-2)

Polymerization was performed according to the same procedure as Production Example 1, using the organic solvent, monomers, and polymerization initiators shown in Table 1 (the polymerization was performed at 85 to 90°C when the polymerization initiator was AIBN, and at 95 to 100°C when t-butyl peroxyoctoate), thus producing Copolymer Solutions (2)-2 to (2)-6 and H-1 to H-2. The viscosity, non-volatile content, Mn, and Tg of each obtained copolymer solution are shown in Table 1.

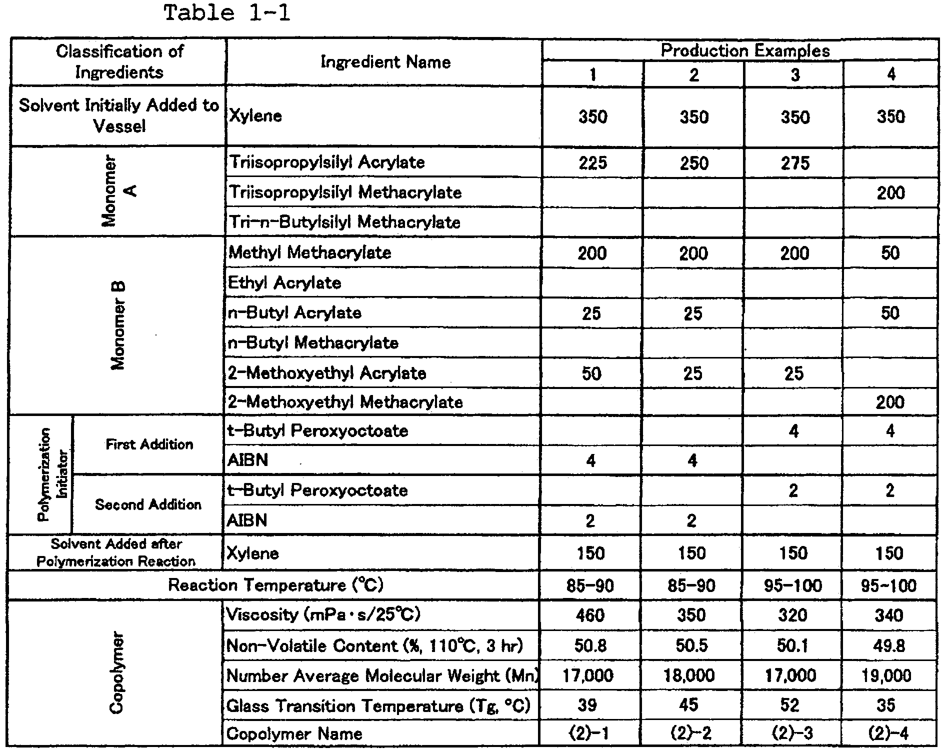

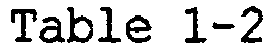

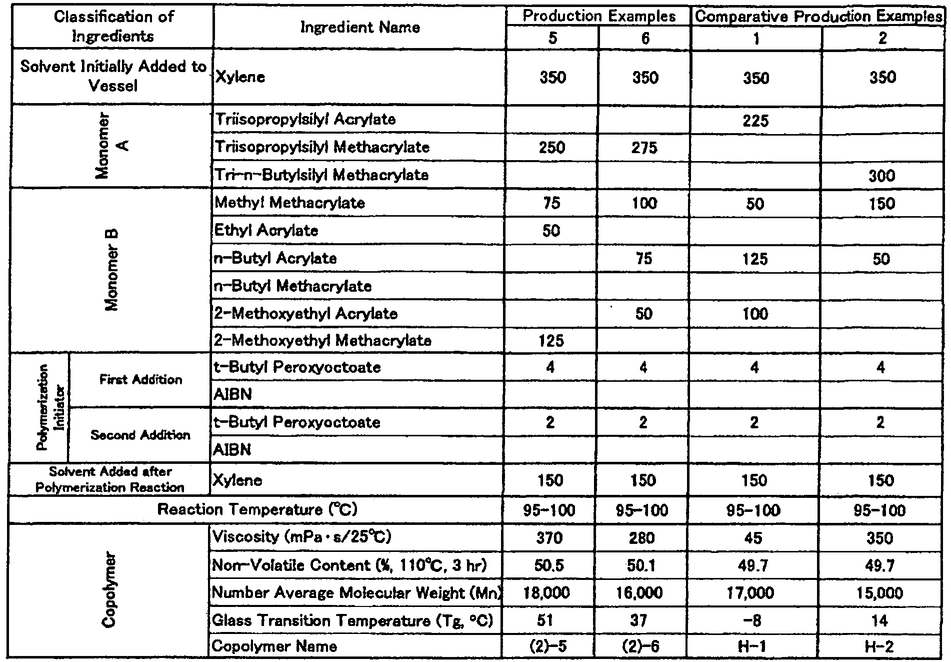

### Production Example 7 (Production of Polymeric Plasticizer (1)-1)

Five hundred grams of xylene was charged to a 1,000 ml flask equipped with a thermometer, a reflux condenser, a stirrer, and a dropping funnel, after which the contents were heated to 125 to 130°C while stirring in a nitrogen atmosphere, and a mixture containing 350 g of 2-methoxyethyl acrylate, 150 g of n-butyl acrylate, 15 g of t-butyl peroxyoctoate, and 1 g of α-methylstyrene dimer (product name "Nofmer MSD"; NOF Corporation) was added dropwise to the flask, with the contents maintained at 125 to 130°C. After the dropwise addition, 1 g of t-butyl peroxyoctoate per hour was added three times to the resulting reaction solution being maintained at 125 to 130°C, and the mixture was further stirred for 2 hours, thus producing Acrylic Resin Solution (1)-1 as a polymeric plasticizer. Acrylic Resin Solution (1)-1 had a viscosity of 45 mPa·s/25°C, a non-volatile content of 52.6%, a Mn of 3,500 and a Tg of -51°C.

### Production Example 8 (Production of Plasticizer (1)-2)

Five hundred grams of xylene was charged to a 1,000 ml flask equipped with a thermometer, a reflux condenser, a stirrer, and a dropping funnel, after which the contents were heated to 125 to 130°C while stirring in a nitrogen atmosphere, and a mixture containing 500 g of n-butyl acrylate and 20 g of t-butyl peroxyoctoate was added dropwise to the flask, with the contents maintained at 125 to 130°C. After the dropwise addition, 1 g of t-butyl peroxyoctoate per hour was added three times to the resulting reaction solution being maintained at 125 to 130°C, and the mixture was further stirred for 2 hours, thus producing Acrylic Resin Solution (1)-2 as a polymeric plasticizer. Acrylic Resin Solution (1)-2 had a viscosity of 22 mPa·s/25°C, a non-volatile content of 52.2%, a Mn of 2,900, and a Tg of -54°C.

### Production Example 9 (Production of Plasticizer (1)-3)

Five hundred grams of xylene was charged to a 1,000 ml flask equipped with a thermometer, a reflux condenser, a stirrer, and a dropping funnel, after which the contents were heated to 125 to 130°C while stirring in a nitrogen atmosphere, and a mixture containing 500 g of 2-ethylhexyl acrylate and 20 g of t-butyl peroxyoctoate was added dropwise to the flask, with the contents maintained at 125 to 130°C. After the dropwise addition, 1 g of t-butyl peroxyoctoate per hour was added three times to the resulting reaction solution being maintained at 125 to 130°C, and the mixture was further stirred for 2 hours, thus producing Acrylic Resin Solution (1)-3 as a polymeric plasticizer. Copolymer Solution (1)-3 had a viscosity of 12 mPa·s/25°C, a non-volatile content of 51.0%, a Mn of 2,300, and a Tg of -85°C.

### Production Example 10 (Production of Plasticizer (1)-4)

Five hundred grams of xylene was charged to a 1,000 ml flask equipped with a thermometer, a reflux condenser, a stirrer, and a dropping funnel, after which the contents were heated to 125 to 130°C while stirring in a nitrogen atmosphere, and a mixture containing 490 g of n-butyl acrylate, 10 g of triisopropylsilyl acrylate, and 20 g of t-butyl peroxyoctoate was added dropwise to the flask, with the contents maintained at 125 to 130°C. After the dropwise addition, 1 g of t-butyl peroxyoctoate per hour was added three times to the resulting reaction solution being maintained at 125 to 130°C, and the mixture was further stirred for 2 hours, thus producing Acrylic Resin Solution (1)-4 as a polymeric plasticizer. Copolymer Solution (1)-4 had a viscosity of 24 mPa·s/25°C, a non-volatile content of 51.3%, a Mn of 2,600, and a Tg of -49°C.

### Comparative Production Example 3 (Production of Acrylic Resin Solution with a Tg of 20°C)

Five hundred grams of xylene was charged to a 1,000 ml flask equipped with a thermometer, a reflux condenser, a stirrer, and a dropping funnel, after which the contents were heated to 125 to 130°C while stirring in a nitrogen atmosphere, and a mixture containing 500 g of n-butyl methacrylate and 20 g of t-butyl peroxyoctoate was added dropwise to the flask, with the contents maintained at 125 to 130°C. After the dropwise addition, 1 g of t-butyl peroxyoctoate per hour was added three times to the resulting reaction solution being maintained at 125 to 130°C, and the mixture was further stirred for 2 hours, thus producing an acrylic resin solution. The acrylic resin solution had a viscosity of 200 mPa·s/25°C, a non-volatile content of 51.0%, a Mn of 2,300, and a Tg of 20°C.

### Production Example 11 (Production of Gum Rosin Zinc Salt)

Four hundred grams of a xylene solution of gum rosin (solids content: 50%), 100 g of ZnO, and 50 g of xylene were added to a 1,000 ml flask equipped with a thermometer, a reflux condenser, and a stirrer, and the mixture was dehydrated by refluxing under reduced pressure for 3 hours at 70 to 80°C. The dehydrated product was subsequently cooled to room temperature (25°C) and filtered, thus producing a xylene solution of gum rosin zinc salt (a transparent dark brown solution, solids content: about 50%). The resulting xylene solution of gum rosin zinc salt had a non-volatile content of 50.5%.

### Production Example 12 (Production of Hydrogenated Rosin Zinc Salt)

Four hundred grams of a xylene solution of hydrogenated rosin (solids content: 50%), 100 g of ZnO, and 50 g of xylene were added to a 1,000 ml flask equipped with a thermometer, a reflux condenser, and a stirrer, and the mixture was dehydrated by refluxing under reduced pressure for 3 hours at 70 to 80°C. The dehydrated product was subsequently cooled to room temperature (25°C) and filtered, thus producing a xylene solution of hydrogenated rosin zinc salt (a transparent dark brown solution, solids content: about 50%). The resulting xylene solution of hydrogenated rosin zinc salt had a non-volatile content of 50.3%.

### Production Example 13 (Production of Disproportionated Rosin Zinc Salt)

Four hundred grams of a xylene solution of disproportionated rosin (solids content: 50%), 100 g of ZnO, and 50 g of xylene were added to a 1,000 ml flask equipped with a thermometer, a reflux condenser, and a stirrer, and the mixture was dehydrated by refluxing under reduced pressure for 3 hours at 70 to 80°C. The dehydrated product was subsequently cooled to room temperature (25°C) and filtered, thus producing a xylene solution of disproportionated rosin zinc salt (a transparent dark brown solution, solids content: about 50%). The resulting xylene solution of disproportionated rosin zinc salt had a non-volatile content of 50.1%.

### Production Example 14 (Production of Gum Rosin Copper Salt)

Four hundred grams of a xylene solution of gum rosin (solids content: 50%), 200 g of Cu₂O, and 100 g of methanol were added, together with glass beads (diameter: 2.5 to 3.5 mm), to a 1,000 ml flask equipped with a thermometer, a reflux condenser, and a stirrer; the mixture was stirred for 8 hours at 70 to 80°C, and subsequently maintained at 50°C for 2 days. The mixture was cooled to room temperature (25°C) and filtered, after which the methanol was distilled off by concentration under reduced pressure and then xylene added, thus producing a xylene solution of gum rosin copper salt (a transparent dark blue solution, solids content: about 50%). The resulting xylene solution of gum rosin copper salt had a non-volatile content of 50.8%.

### Production Example 15 (Production of Hydrogenated Rosin Copper Salt)

Four hundred grams of a xylene solution of hydrogenated rosin (solids content: 50%), 200 g of Cu₂O, and 100 g of methanol were added, together with glass beads (diameter: 2.5 to 3.5 mm), to a 1,000 ml flask equipped with a thermometer, a reflux condenser, and a stirrer; the mixture was stirred for 8 hours at 70 to 80°C, and subsequently maintained at 50°C for 2 days. The mixture was cooled to room temperature (25°C) and filtered, after which the methanol was distilled off by concentration under reduced pressure and then xylene added, thus producing a xylene solution of hydrogenated rosin copper salt (a transparent dark blue solution, solids content: about 50%). The resulting xylene solution of hydrogenated rosin copper salt had a non-volatile content of 50.3%.

### Production Example 16 (Production of Disproportionated Rosin Copper Salt)

Four hundred grams of a xylene solution of disproportionated rosin (solids content: 50%), 200 g of Cup, and 100 g of methanol were added, together with glass beads (diameter: 2.5 to 3.5 mm), to a 1,000 ml flask equipped with a thermometer, a reflux condenser, and a stirrer; the mixture was stirred for 8 hours at 70 to 80°C, and subsequently maintained at 50°C for 2 days. The mixture was cooled to room temperature (25°C) and filtered, after which the methanol was distilled off by concentration under reduced pressure and then xylene added, thus producing a xylene solution of disproportionated rosin copper salt (a transparent dark blue solution, solids content: about 50%). The resulting xylene solution of disproportionated rosin copper salt had a non-volatile content of 50.2%.

### Examples 1 to 12 and Comparative Examples 1 to 6 (Production of Coating Compositions)

The following ingredients listed in Table 2 were blended in the proportions (wt%) given in Table 2: one f Copolymer Solutions (2)-1 to (2)-6 obtained in Production Examples 1 to 6 and Copolymer Solutions H-1 and H-2 obtained in Comparative Production Examples 1 and 2 for use as Copolymers (2); any of the xylene solutions of zinc salts or copper salts (solids content: about 50%) obtained in Production Examples 11 to 16, a xylene solution of gum rosin (solids content: about 50%), a xylene solution of hydrogenated rosin (solids content: about 50%), and a xylene solution of disproportionated rosin (solids content: about 50%) for use as rosin zinc salts or zinc salts of rosin derivatives; and any of Plasticizers (1)-1 to (1)-4 obtained in Production Examples 7 to 10, the acrylic resin solution with a Tg of 20°C obtained in Comparative Production Example 3, an acrylic resin (product name "ARUFON UP-1080"; Toagosei, Co., Ltd.; solids content: 100%, Tg: -61°C, Mn: 2400), tricresyl phosphate, ethyl vinyl ether copolymer (product name "Lutonal A-25"; BASF), an epoxidized soybean oil (product name "Sansocizer E-2000H"; New Japan Chemical), and a chlorinated paraffin (chlorine content: about 40%) for use as plasticizers; as well as any of the antifoulants, pigments, additives, and solvents. The ingredients were mixed and dispersed with a small desktop laboratory sand mill (using glass beads with a diameter of 1.5 to 2.5 mm) to prepare coating compositions.

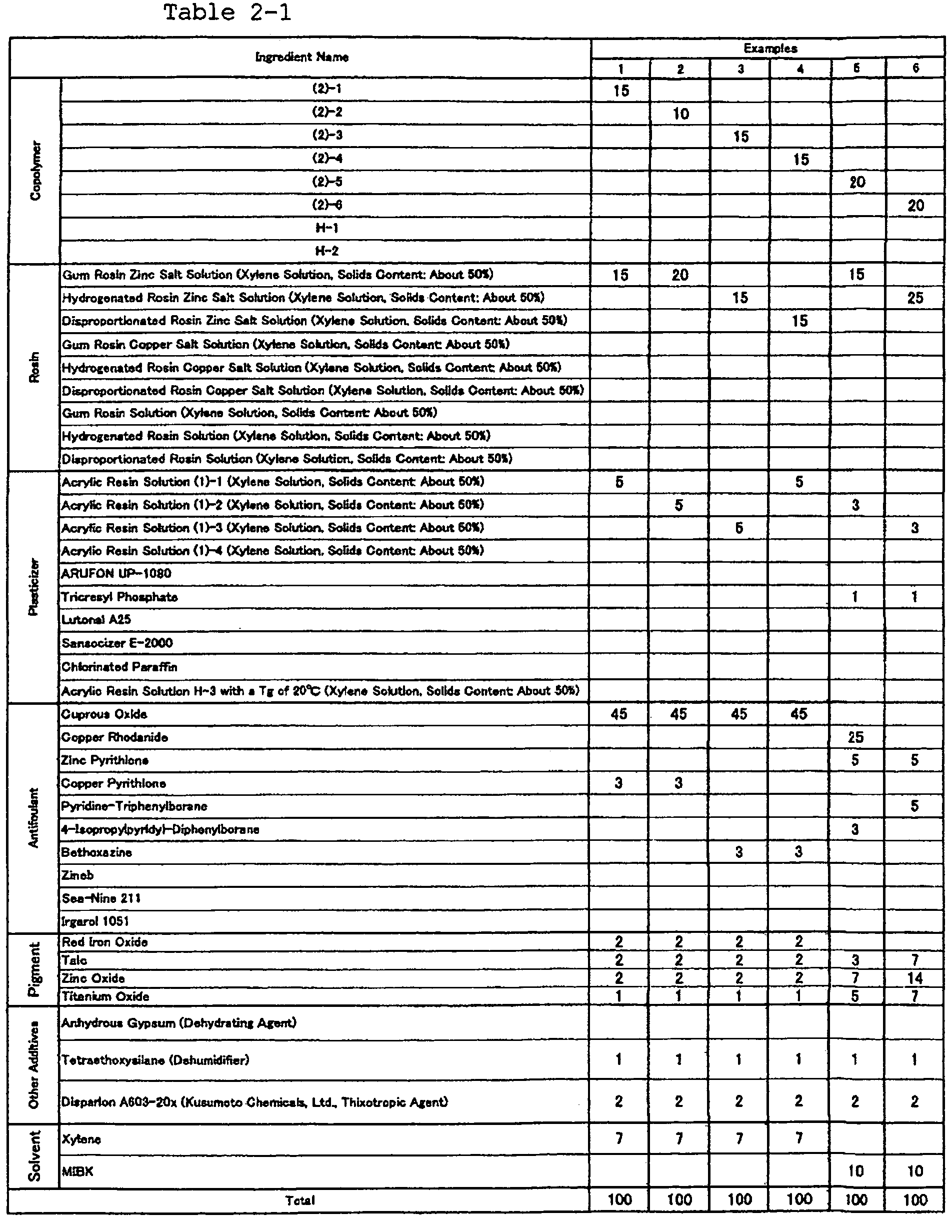

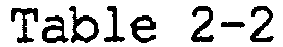

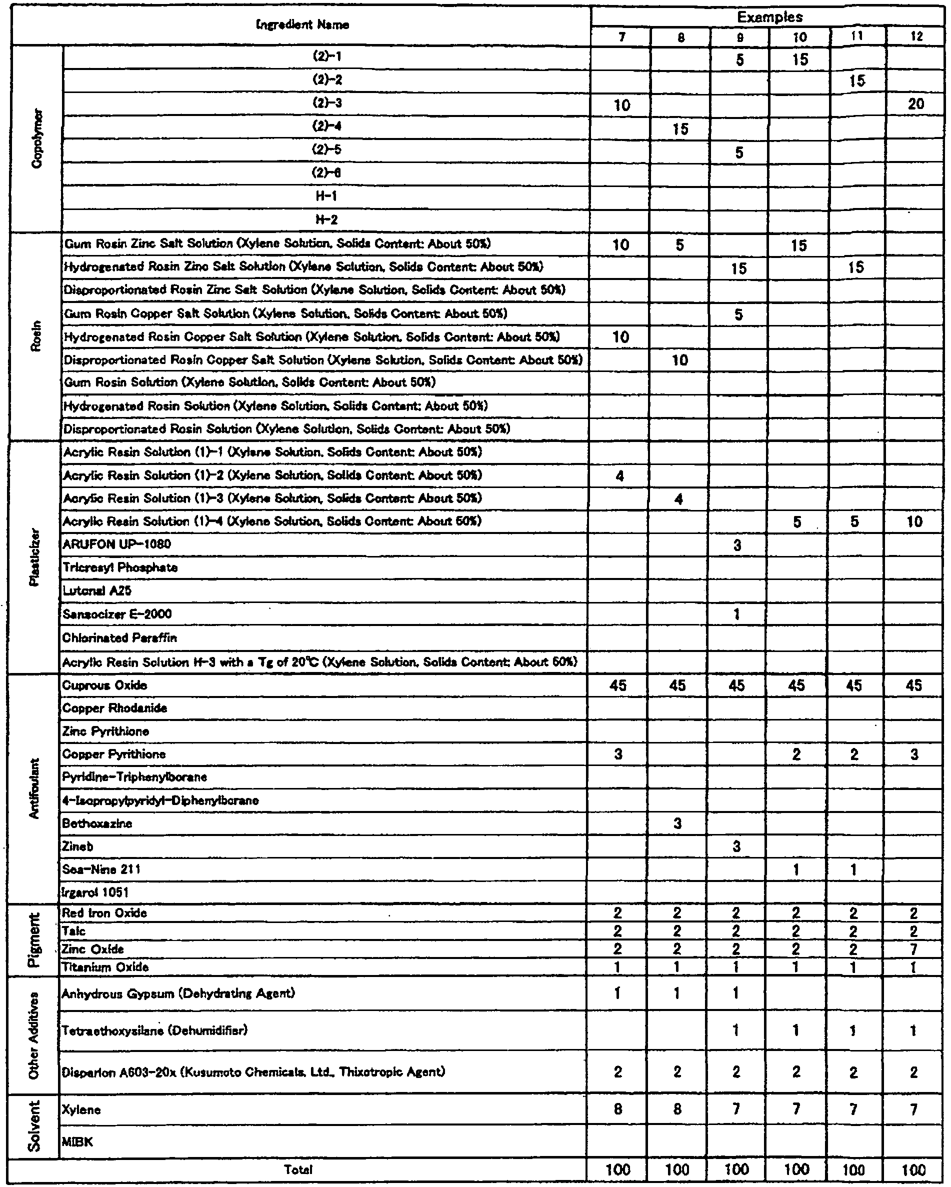

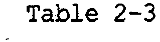

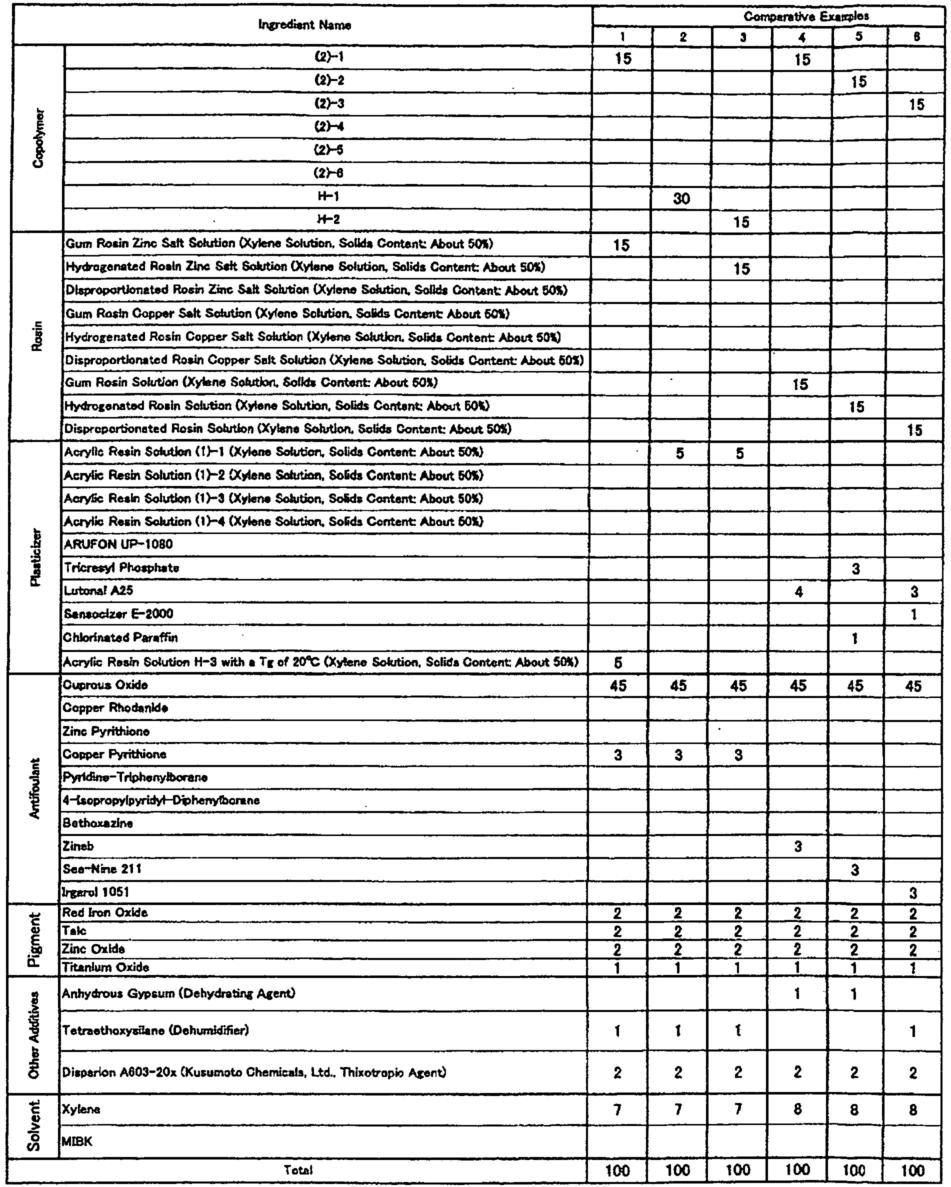

### Test Example 1 (Stability Test for Coating Compositions)

Each of the coating compositions obtained in Examples 1 to 12 and Comparative Examples 1 to 6 was sealed in a 100 ml wide-mouth tin can and stored in an incubator regulated at a constant temperature of 40°C for 1 month, after which the viscosity of the coating composition was measured using a Brookfield viscometer.

The viscosity of the coating composition after 1-month storage was evaluated as follows.
A: a change in viscosity of less than 500 mPa·s/25°C (substantially no change in the coating composition)
B: a change in viscosity of 500 to 5,000 mPa·s/25°C (a slight increase in viscosity)
C: a change in viscosity of 5,000 to 100,000 mPa·s/25°C (a significant increase in viscosity)
D: a change so significant that the viscosity was unmeasurable (the coating composition turned into a gel or solidified)

The results are shown in Table 3. It can be seen from Table 3 that the coating compositions of the invention (Ex. 1-12) exhibit excellent long-term storage stability.

### Test Example 2 (Coating Film Hardness)

Each of the antifouling coating compositions obtained in Examples 1 to 12 and Comparative Examples 1 to 6 was applied to a transparent glass plate (75 x 150 x 1 mm) so that the dry coating film thickness would be about 100 µm, and dried for 1 day at 40°C. The coating film hardness of the resulting dry coating film was measured at 25°C using a pendulum hardness tester. The results (count number) are shown in Table 3. A count number of 20 to 50 is preferable for practical purposes.

It can be seen from Table 3 that the coating films formed using the coating compositions of the invention (Ex, 1-12) have a suitable hardness.

### Test Example 3 (Adhesion Test for Coating Films)

The adhesion of each coating film was tested in accordance with the JIS K-5600-5-6 standard. Specifically, each of the coating compositions obtained in Examples 1 to 12 and Comparative Examples 1 to 6 was first applied to a blast-finished fiber-reinforced plastic plate (FRP plate) (75 x 150 x 2 mm) and a tin plate (75 x 150 x 2 mm) so that the dry coating film thickness would be about 100 µm, and the applied coating was dried for 1 day at 40°C. The adhesion test was subsequently conducted on the dry coating film (2 x 2 mm, the number of squares in the crosshatch = 100).

The adhesion was evaluated as follows.
A: the number of the squares that did not peel off is from 70 to 100.
B: the number of the squares that did not peel off is from 40 to 69
C: the number of the squares that did not peel off is from 20 to 39
D: the number of the squares that did not peel off is from 0 to 19.

The results are shown in Table 3.

It can be seen from Table 3 that the coating films formed using the coating compositions of the invention (Ex. 1-12) strongly adhere to both the FRP plate and tin plate.

### Test Example 4 (Flexibility Test for Coating Films)

Each of the coating compositions obtained in Examples 1 to 12 and Comparative Examples 1 to 6 was applied to a blast-finished tin plate (75 x 150 mm) so that the dry coating film thickness would be about 100 µm, and the applied coating was dried for 1 day at 40°C. The tin plate was bent 90 degrees, and the condition of the bent coating film was visually inspected. The flexibility was evaluated as follows.
A: substantially free of cracks
B: contained minute cracks
C: contained large cracks
D: a portion of the coating film easily peeled

The results are shown in Table 3.

It can be seen from Table 3 that the coating films formed using the coating compositions of the invention (Ex. 1-12) are tough and resistant to embrittlement.

### Test Example 5 (Water Resistance Test for Coating Films)

An anti-corrosive coating material (a vinyl-based A/C) was applied to a ground glass plate (75 x 150 x 1 mm) so that the thickness after drying would be about 50 µm, and the coating was dried. Each of the coating compositions obtained in Examples 1 to 12 and Comparative Examples 1 to 6 was subsequently applied so that the dry coating film thickness would be about 100 µm, and the applied coating was dried for 1 day at 40°C, thus producing a test piece. The test piece was immersed in natural seawater at 35°C for 3 months, after which the condition of the coating film was visually inspected.

The water resistance was evaluated as follows.
A: the coating film underwent no change
B: the coating film slightly changed color
C: the coating film was slightly blistered
D: defects such as cracks, swelling, and peeling were observed in the coating film

The results are shown in Table 3.

It can be seen from Table 3 that the coating films formed using the coating film compositions of the invention (Ex. 1-12) have excellent resistance to water.

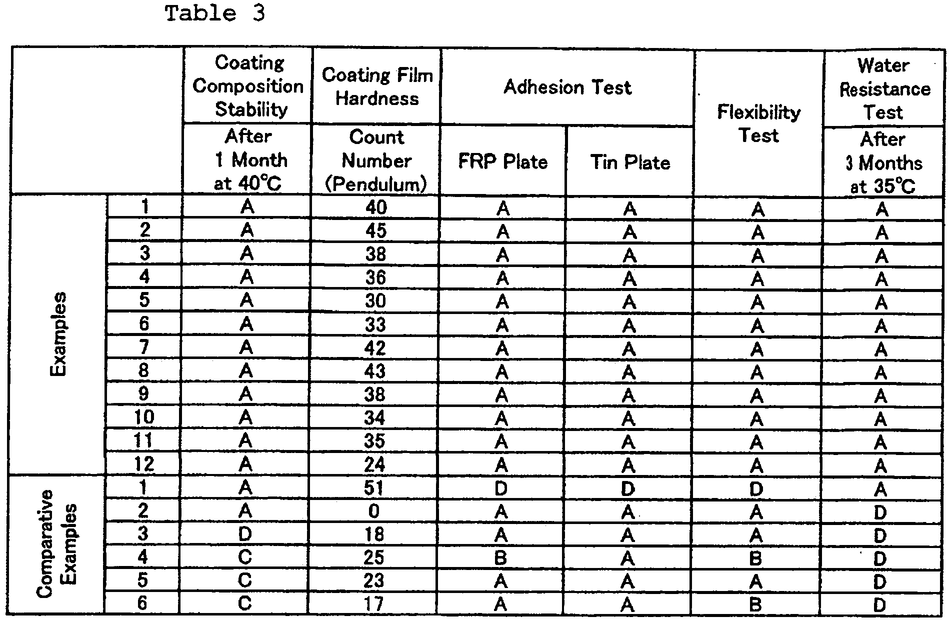

### Test Example 6 (Solubility Test (Rotary Test) for Coating Films)

A tank was centrally provided with a rotating drum with a diameter of 515 mm and a height of 440 mm to allow the rotation of the drum via a motor. The tank was also provided with a cooling apparatus for keeping the seawater temperature constant, and an automatic pH controller for keeping the pH of the seawater constant.

An anti-corrosive coating material (a vinyl-based A/C) was applied to a hard vinyl chloride plate (75 x 150 x 1 mm) so that the thickness after drying would be about 50 µm, and the coating was dried. Each of the coating compositions obtained in Examples 1 to 12 and Comparative Examples 1 to 6 was subsequently applied so that the thickness of the coating film after drying would be about 300 µm, and the applied coating was dried for 3 days at 40°C, thus producing a test plate. Each of the thus-prepared test plates was secured to the rotating drum of the rotary apparatus of the above-mentioned equipment to contact the seawater, and the rotating drum was rotated at a speed of 20 knots. During the test, the seawater temperature was maintained at 25°C and the pH at 8.0 to 8.2; the seawater was replaced once every week. The initial coating film thickness and the remaining coating film thickness after every 6 months were measured for each test plate, using a laser focus displacement meter, and the thickness of the dissolved coating film was calculated from the difference therebetween to give the dissolving amount of the coating film.

The dissolving amount of the coating film is represented in terms of the dissolving amount of the coating film per month (µm/month). The results are shown in Table 4.

It can be seen from Table 4 that the coating films formed using the coating compositions of the invention (Ex, 1 to 12) are dissolved in seawater in amounts of about 3 to 8 µm per month; because of the certain reductions in the hydrolysis rate, the coating compositions of the invention are dissolved stably for an extended period of time. Furthermore, the coating films formed using the coating compositions of the invention (Ex. 1 to 12) did not show any cracks or peeling after 24 months. Hence, an antifouling coating film can be more advantageously formed by directly applying each of these antifouling coating film compositions on top of the coating film, thereby maintaining the antifouling performance.

It can be seen that the coating film formed using the coating composition of Comparative Example 1 is difficult to dissolve in seawater, and cannot effectively exhibit an antifouling effect. The coating film formed using the coating composition of Comparative Example 2 is brittle and subject to cold flow. The coating films formed using the coating compositions of Comparative Examples 3 to 6 have poor water resistance and are subject to cracking and/or peeling during the test.

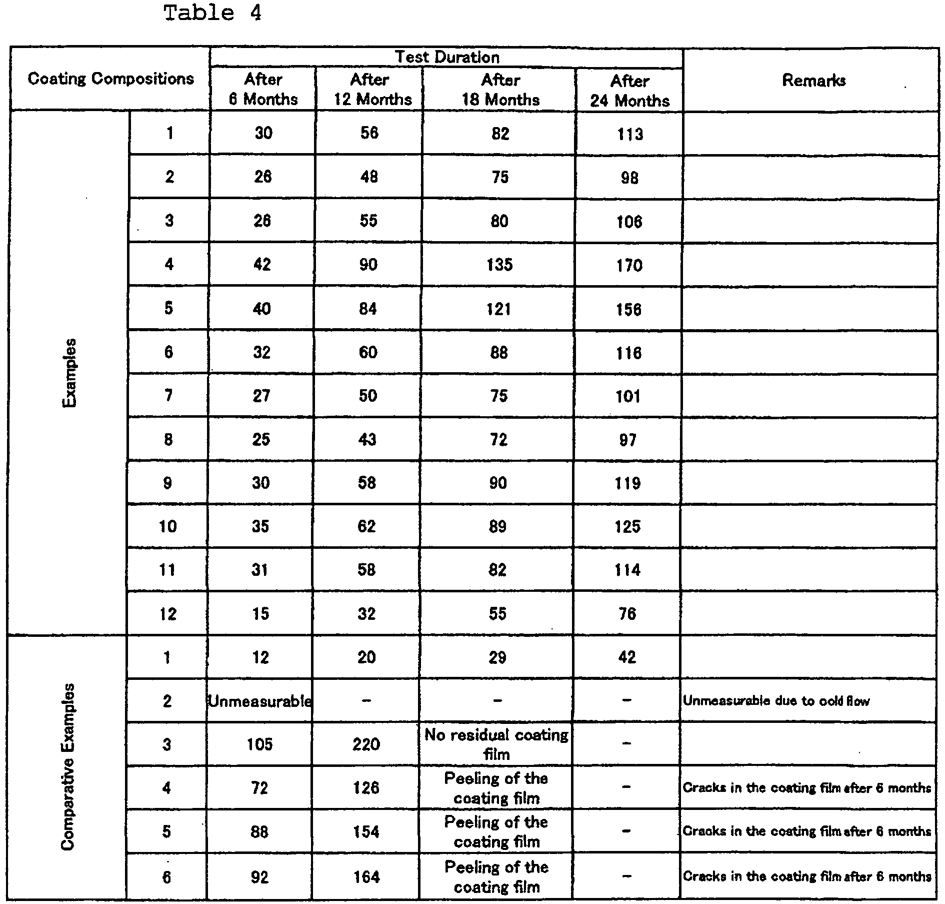

### Test Example 7 (Antifouling Test)

Each of the antifouling coating compositions obtained in Examples 1 to 12 and Comparative Examples 1 to 6 was applied to both surfaces of a hard vinyl chloride plate (100 x 200 x 2 mm) so that the dry coating film thickness would be about 200 µm, and the coating was dried to prepare a test plate. This test plate was immersed at 1.5 m below sea level in Owase City, Mie Prefecture, Japan, and fouling of the test plate was examined for 24 months.

The results are shown in Table 5.

Note that the figures in Table 5 represent the areas (%) to which fouling organisms were attached.

It can be seen from Table 5 that the coating films formed using the coating compositions of the invention (Ex. 1-12) are substantially free of aquatic fouling organisms, compared with the coating films formed using the coating film compositions of Comparative Examples 1 to 6. This is because the coating films formed using the coating compositions of the invention (Ex, 1-12) exhibit certain reductions in the hydrolysis rate, so that they are dissolved stably for an extended period of time.

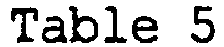

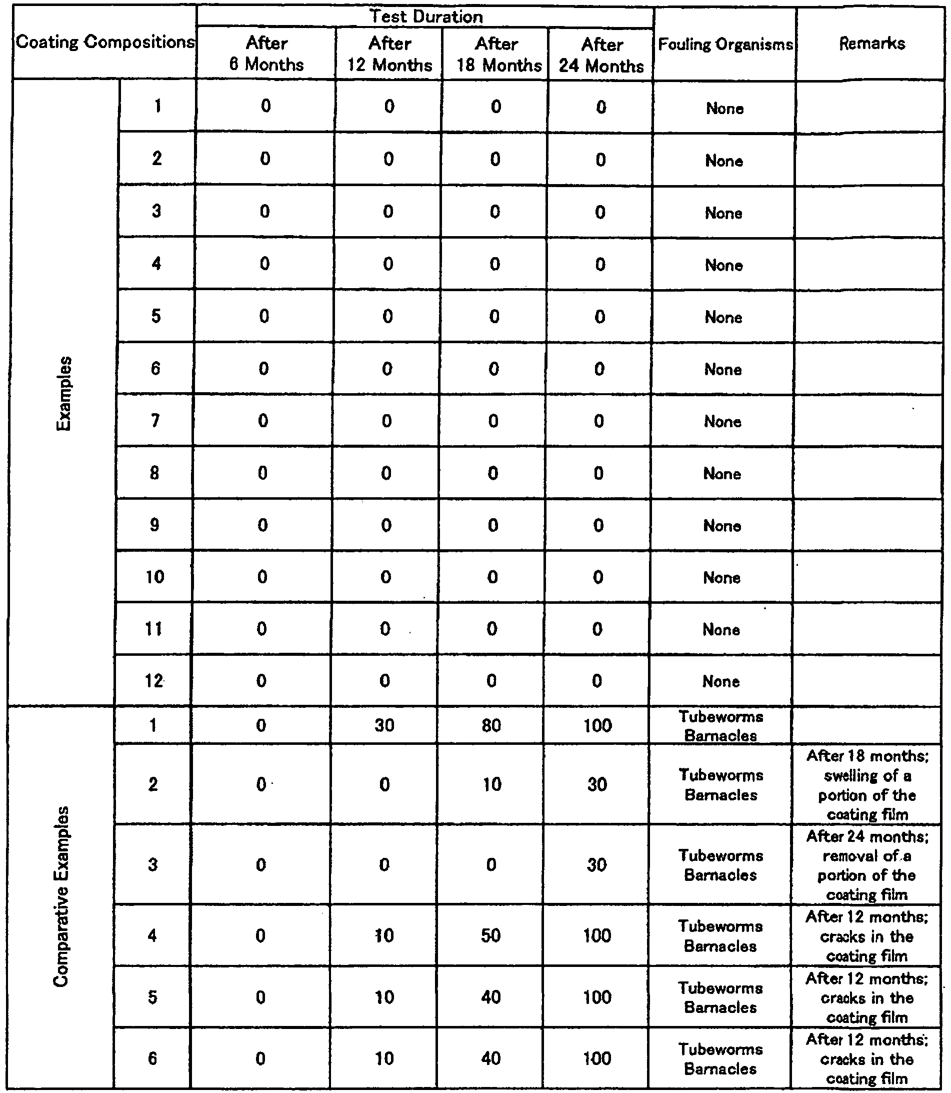

## Claims

1. An antifouling coating composition comprising:
(1) a polymeric plasticizer comprising an ethylenically unsaturated carboxylate polymer having a glass transition temperature of not greater than -20°C and a number average molecular weight of 500 to 20,000;
(2) a triorganosilyl (meth)acrylate copolymer, which is a copolymer of triorganosilyl (meth)acrylate monomer A represented by General Formula (I): 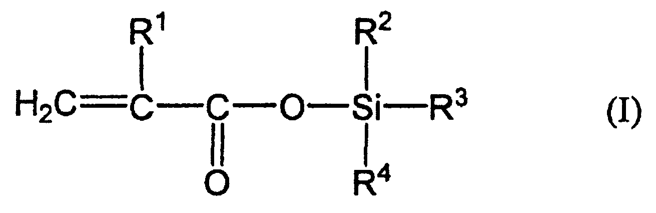 wherein R¹ represents a hydrogen atom or methyl group, and R² to R⁴ may be the same or different independently and represent a branched alkyl group having 3 to 8 carbon atoms or phenyl group, with
ethylenically unsaturated monomer B other than the monomer A, the triorganosilyl (meth)acrylate copolymer having a glass transition temperature of not less than 0°C and a number average molecular weight of 5,000 to 100,000; and
(3) an antifoulant.

2. The antifouling coating composition according to claim 1, wherein the polymeric plasticizer is a (meth)acrylate polymer having a glass transition temperature of not greater than -40°C and a number average molecular weight of 1,000 to 10,000.

3. The antifouling coating composition according to claim 2, wherein the (meth)acrylate polymer is a copolymer of a triorganosilyl (meth)acrylate monomer and a (meth)acrylate monomer other than the triorganosilyl (meth)acrylate monomer.

4. The antifouling coating composition according to claim 1, wherein the monomer A is triisopropylsilyl (meth)acrylate.

5. The antifouling coating composition according to claim 1, which further comprises at least one salt selected from the group consisting of rosin zinc salts, zinc salts of rosin derivatives, rosin copper salts and copper salts of rosin derivatives.

6. The antifouling coating composition according to claim 5, which comprises 1 to 100 parts by weight of the polymeric plasticizer (1) per 100 parts by weight of the total amount of the copolymer (2) and the salt.

7. The antifouling coating composition according to claim 1, which further comprises a dehydrating agent and/or dehumidifier.

8. A method of antifouling treatment comprising the step of:
forming an antifouling coating film on the surface of an object to be coated using the antifouling coating composition of claim 1.

9. An antifouling coating film formed using the antifouling coating composition of claim 1.

10. An antifouling coated object having the coating film of claim 9 on its surface.

11. A method for producing an antifouling coating composition comprising the step of:
mixing and dispersing a mixture of (1) a polymeric plasticizer comprising an ethylenically unsaturated carboxylate polymer having a glass transition temperature of not greater than -20°C and a number average molecular weight of 500 to 20,000;
(2) a triorganosilyl (meth)acrylate copolymer, which is a copolymer of triorganosilyl (meth)acrylate monomer A represented by General Formula (I): 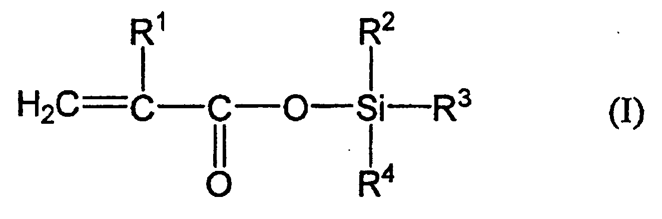 wherein R¹ represents a hydrogen atom or methyl group, and R² to R⁴ may be the same or different independently and represent a branched alkyl group having 3 to 8 carbon atoms or phenyl group, with
ethylenically unsaturated monomer B other than the monomer A, the triorganosilyl (meth)acrylate copolymer having a glass transition temperature of not less than 0°C and a number average molecular weight of 5,000 to 100,000; and
(3) an antifoulant.

## Patentansprüche

1. Eine Antifoulingbeschichtungszusammensetzung, umfassend:
(1) einen polymeren Weichmacher, umfassend ein ethylenisch ungesättigtes Carboxylat-Polymer, das eine Glasübergangstemperatur von nicht höher als -20°C und ein Zahlenmittel des Molekulargewichts von 500 bis 20.000 aufweist;
(2) ein Triorganosilyl(meth)acrylatcopolymer, welches ein Copolymer aus Triorganosilyl(meth)acrylat-Monomer A, dargestellt durch die allgemeine Formel (I): 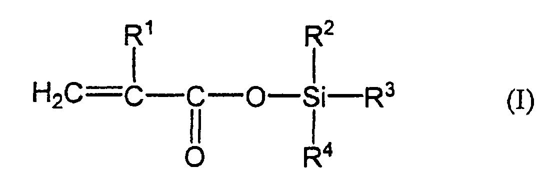 wobei R¹ ein Wasserstoffatom oder eine Methylgruppe darstellt und R² bis R⁴ unabhängig voneinander gleich oder unterschiedlich sein können und einen verzweigten Alkylrest mit 3 bis 8 Kohlenstoffatomen oder einen Phenylrest darstellen,
mit einem ethylenisch ungesättigtem Monomer B ist, das von Monomer A verschieden ist, wobei das Triorganosilyl(meth)acrylatcopolymer eine Glasübergangstemperatur von nicht niedriger als 0°C und ein Zahlenmittel des Molekulargewichts von 5.000 bis 100.000 aufweist; und
(3) ein Antifoulingmittel.

2. Die Antifoulingbeschichtungszusammensetzung gemäß Anspruch 1, wobei der polymere Weichmacher ein (Meth)acrylatpolymer ist, das eine Glasübergangstemperatur von nicht höher als -40°C und ein Zahlenmittel des Molekulargewichts von 1.000 bis 10.000 aufweist.

3. Die Antifoulingbeschichtungszusammensetzung gemäß Anspruch 2, wobei das (Meth)acrylatpolymer ein Copolymer eines Triorganosilyl(meth)acrylat-Monomers und eines (Meth)acrylat-Monomers ist, das von dem Triorganosilyl(meth)acrylatmonomer verschieden ist.

4. Die Antifoulingbeschichtungszusammensetzung gemäß Anspruch 1, wobei das Monomer A ein Triisopropylsilyl(meth)acrylat ist.

5. Die Antifoulingbeschichtungszusammensetzung gemäß Anspruch 1, welche ferner mindestens ein Salz, ausgewählt aus der Gruppe bestehend aus Kolophoniumzinksalzen, Zinksalzen von Kolophoniumderivaten, Kolophoniumkupfersalzen und Kupfersalzen von Kolophoniumderivaten, umfasst.

6. Die Antifoulingbeschichtungszusammensetzung gemäß Anspruch 5, welche 1 bis 100 Gewichtsteile des polymeren Weichmachers (1) pro 100 Gewichtsteile der Gesamtmenge des Copolymers (2) und des Salzes umfasst.

7. Die Antifoulingbeschichtungszusammensetzung gemäß Anspruch 1, welche ferner ein Dehydratisierungsmittel und/oder einen Entfeuchter umfasst.

8. Ein Verfahren zur Antifoulingbehandlung, umfassend den Schritt:
Bilden eines Antifoulingbeschichtungsfilms auf der Oberfläche eines zu beschichtenden Gegenstands unter Verwendung der Antifoulingbeschichtungszusammensetzung gemäß Anspruch 1.

9. Ein Antifoulingbeschichtungsfilm, der unter Verwendung der Antifoulingbeschichtungszusammensetzung gemäß Anspruch 1 gebildet wird.

10. Ein antifoulingbeschichteter Gegenstand, der den Beschichtungsfilm gemäß Anspruch 9 auf seiner Oberfläche aufweist.

11. Ein Verfahren zur Herstellung einer Antifoulingbeschichtungszusammensetzung umfassend den Schritt:
Mischen und Dispergieren eines Gemisches aus (1) einem polymeren Weichmacher, umfassend ein ethylenisch ungesättigtes Carboxylat-Polymer, das eine Glasübergangstemperatur von nicht höher als -20°C und ein Zahlenmittel des Molekulargewichts von 500 bis 20.000 aufweist;
(2) einem Triorganosilyl(meth)acrylatcopolymer, welches ein Copolymer aus Triorganosilyl(meth)acrylat-Monomer A, dargestellt durch die allgemeine Formel (I): 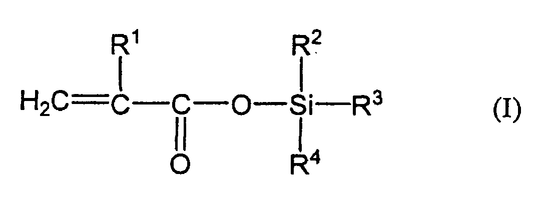 wobei R¹ ein Wasserstoffatom oder eine Methylgruppe darstellt und R² bis R⁴ unabhängig voneinander gleich oder unterschiedlich sein können und einen verzweigten Alkylrest mit 3 bis 8 Kohlenstoffatomen oder einen Phenylrest darstellen,
mit einem ethylenisch ungesättigtem Monomer B ist, das von Monomer A verschieden ist, wobei das Triorganosilyl(meth)acrylatcopolymer eine Glasübergangstemperatur von nicht niedriger als 0°C und ein Zahlenmittel des Molekulargewichts von 5.000 bis 100.000 aufweist; und
(3) einem Antifoulingmittel.

## Revendications

1. Composition de revêtement anti-salissant comprenant :
(1) un plastifiant polymère comprenant un polymère de carboxylate éthyléniquement insaturé ayant une température de transition vitreuse d'au plus -20°C et une masse moléculaire moyenne en nombre de 500 à 20 000 ;
(2) un copolymère de (méth)acrylate de triorganosilyle, lequel est un copolymère de monomère de (méth)acrylate de triorganosilyle A représenté par la formule générale (I) : 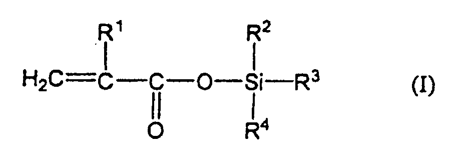 dans laquelle R¹ représente un atome d'hydrogène ou un groupe méthyle, et R² à R⁴ peuvent être identiques ou différents indépendamment et représentent un groupe alkyle ramifié ayant de 3 à 8 atomes de carbone ou un groupe phényle,
avec
un monomère éthyléniquement insaturé B différent du monomère A, le copolymère de (méth)acrylate de triorganosilyle ayant une température de transition vitreuse d'au moins 0°C et une masse moléculaire moyenne en nombre de 5 000 à 100 000 ; et
(3) un anti-salissant.

2. Composition de revêtement anti-salissant selon la revendication 1, dans laquelle le plastifiant polymère est un polymère de (méth)acrylate ayant une température de transition vitreuse d'au plus -40°C et une masse moléculaire moyenne en nombre de 1 000 à 10 000.

3. Composition de revêtement anti-salissant selon la revendication 2, dans laquelle le polymère de (méth)acrylate est un copolymère d'un monomère de (méth)acrylate de triorganosilyle et d'un monomère de (méth)acrylate différent du monomère de (méth)acrylate de triorganosilyle.

4. Composition de revêtement anti-salissant selon la revendication 1, dans laquelle le monomère A est le (méth)acrylate de triisopropylsilyle.

5. Composition de revêtement anti-salissant selon la revendication 1, laquelle comprend de plus au moins un sel choisi dans le groupe constitué de sels de colophane et de zinc, de sels de zinc de dérivés de colophane, de sels de cuivre et de colophane et de sels de cuivre de dérivés de colophane.

6. Composition de revêtement anti-salissant selon la revendication 5, laquelle comprend de 1 à 100 parties en masse du plastifiant polymère (1) pour 100 parties en masse de la quantité totale du copolymère (2) et du sel.

7. Composition de revêtement anti-salissant selon la revendication 1, laquelle comprend de plus un agent déshydratant et/ou un agent déshumidifiant.

8. Procédé de traitement anti-salissant comprenant l'étape consistant :
à former un film de revêtement anti-salissant sur la surface d'un objet à revêtir en utilisant la composition de revêtement anti-salissant selon la revendication 1.

9. Film de revêtement anti-salissant formé en utilisant la composition de revêtement anti-salissant selon la revendication 1.

10. Objet revêtu d'un anti-salissant présentant le film de revêtement selon la revendication 9 sur sa surface.

11. Procédé de production d'une composition de revêtement anti-salissant comprenant l'étape consistant :
à mélanger et à disperser un mélange de (1) un plastifiant polymère comprenant un polymère de carboxylate éthyléniquement insaturé ayant une température de transition vitreuse d'au plus -20°C et une masse moléculaire moyenne en nombre de 500 à 20 000 ;
(2) un copolymère de (méth)acrylate de triorganosilyle, lequel est un copolymère de monomère de (méth)acrylate de triorganosilyle A représenté par la formule générale (I) : 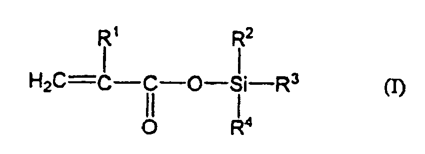
dans laquelle R¹ représente un atome d'hydrogène ou un groupe méthyle, et R² à R⁴ peuvent être identiques ou différents indépendamment et représentent un groupe alkyle ramifié ayant de 3 à 8 atomes de carbone ou un groupe phényle,
avec
un monomère éthyléniquement insaturé B différent du monomère A, le copolymère de (méth)acrylate de triorganosilyle ayant une température de transition vitreuse d'au moins 0°C et une masse moléculaire moyenne en nombre de 5 000 à 100 000 ; et
(3) un anti-salissant.
